# EUROPEAN PATENT SPECIFICATION

(11) **EP 2 700 767 B1**
(45) Date of publication and mention of the grant of the patent: **16.09.2020**
(21) Application number: 13004121.3
(22) Date of filing: 20.08.2013
(51) Int. Cl.: E04F 13/12, E04F 15/06, E04F 13/08, E04F 15/18

(54) **Improved heat transfer through interior cladding of living spaces**
Verbesserte Wärmeübertragung durch Innenverkleidung von Wohnräumen
Transfert de chaleur amélioré par le revêtement intérieur d'espaces de vie

(30) Priority: 21.08.2012 GB 201214909
(43) Date of publication of application: 26.02.2014
(73) Proprietor: Gregory, Bruce, London SE21 8AB (GB)
(72) Inventor: Gregory, Bruce, London SE21 8AB (GB)

(56) References cited:
- EP-A2- 0 089 012
- EP-A2- 0 859 200
- CN-U- 201 865 290
- DE-A1- 2 535 522
- DE-A1- 3 211 970
- DE-A1- 10 361 421
- JP-A- H 094 860
- JP-A- 2011 030 696

## Description

### FIELD OF INVENTION

Radiant heating and cooling applied to domestic and commercial living and working spaces.

The present invention concerns the use of thermal bridging to reduce the temperature drop for a given heat flow through a number of forms of interior cladding, for example, plasterboard, engineered wood flooring and carpet underlay.

### BACKGROUND OF INVENTION

The present invention enables the use of low-temperature radiant heating systems (LTRHS) (and high temperature radiant cooling systems), thereby improving efficiency of energy use in heating and cooling living spaces and enabling efficient use of renewable heat sources. In both instances, there is an associated reduction in carbon emissions.

Energy saving in residential and commercial space heating is a significant opportunity since space heating is a large component of total national energy use. For example, in the US, such space heating is around 12% of total energy use. In the UK the equivalent figure is approximately 18%.

Additionally, the invention enables a wider choice of radiant systems for living spaces and of cladding systems for living spaces, where cladding means any individual layers or laminated multiple layers of material installed on or in the interior floor, wall or ceiling, including layers that are load-bearing, insulating, protective or decorative. Living spaces include all spaces both domestic and commercial that are heated or cooled for human or animal comfort.

### LTHRS

A LTHRS delivers heat using surface temperatures typically between 21 and 25 degrees C and using large radiant areas: usually floor, wall or ceiling surfaces. The energy-saving benefits of a LTHRS arise from increased efficiency in boilers, heat pumps, solar thermal systems, use of waste and geothermal heat, improved control and better delivery of comfort.

LTHRS can be either 'wet' or 'dry'. Wet systems involve burying heating pipes in some setting material: a wet screed, usually based on hydrates of calcium sulphate or calcium silicate. Dry systems carry and cover heating pipes using panels of solid material. Almost all modern wet systems use PEX tube arranged in a serpentine. The most common installation in domestic living spaces is in the floor. In commercial living spaces, the LTHRS often employs pre-assembled panels suspended from the ceiling.

Dry LTHRS for under-floor heating comprise mainly (a) under-subfloor systems in which PEX tube is attached to the underside of a subfloor (which may be timber planks or chipboard or similar) and between joists. Aluminium plates or 'heat-spreaders' are attached to the pipes and insulation is attached under the pipes; (b) floating floor systems in which PEX tube is attached to panels that sit on the existing subfloor. The panels are insulating, being made of engineered wood (plywood, strand board or chipboard) or dense foam polystyrene or similar.

In order for the LTHRS to run at the lowest possible water temperature, the temperature drop from hot water to radiant surface must be as small as possible. The main elements of the thermal path of a typical under-floor LTHRS are, in sequence: (a) water, (b) PEX tube wall, (c) heat spreader (usually aluminium plate or foil), (d) subfloor, (e) dry screed, (f) floor underlay, (g) floor board or tile, (h) carpet or rug underlay, (i) carpet or rug. Some of these elements may be absent. For example, subfloor is not on the thermal path if the heating tubes are installed above the subfloor. A similar, and simpler list can be constructed for a heating or cooling system that is placed in the wall or ceiling. This list may include plasterboard, for example.

The present invention concerns the use of thermal bridging to reduce the temperature drop in the thermal path.

### Thermal bridging

In the present invention, thermal bridging always involves three elements: (a) the thermal shunt: one or more heat-conducting components that are aligned with the radiant thermal path and that penetrate the cladding; (b) on the heat absorbing side of the cladding, a heat-collecting layer aligned with the cladding, with this layer thermally connected to the thermal shunt; (c) on the heat emitting side of the cladding, a heat-dispersing layer aligned with the cladding, with this layer thermally connected to the thermal shunt. The ideal thermal shunt provides a thermal path through the cladding that is as short as possible ie it traverses the cladding at right angles to the plane of the cladding. It follows that the preferred geometry of a thermal bridge across cladding is rectangular. The average thermal path through the entire thermal bridge should also be as short as possible. This means that a preferred configuration of thermal shunt is as a uniform array of elements that is perpendicular to the plane of the cladding, so spreading the thermal load on the heat-collecting layer and on the heat-dispersing layer.

The material of a thermal bridge is always of higher conductivity than the material of the cladding.

In general, it is useful to consider the ratio of the thermal conductivity of the bridge to the thermal conductivity of the cladding. As an example, standard tile porcelain (K= 1.3 watts/m°C) is ten times as conductive as most soft woods. Therefore, in principle, a relatively small volume of tile porcelain (say 10% of the volume of the wood) can significantly reduce the temperature drop across softwood for a given rate of heat transfer and so can be a practical material for a thermal bridge across softwood. However, standard tile porcelain is only five times as conductive as dense plasterboard (K = 0.24 m°C) and is therefore a questionable material for a thermal bridge across such cladding.

Cladding as defined here can be a multi-layer laminate. In this case, the thermal conductivity relevant to thermal bridging of the cladding is the effective conductivity across all layers taken together.

Thermal contact resistance in any joins between the shunt and the heat-collecting layer and between the shunt and the heat-dispersing layer should be reduced to a minimum. Contact resistance is preferably eliminated by making the three elements of the thermal bridge - the thermal shunt, the heat-collecting layer and the heat-dispersing layer - out of the same continuous piece of material. Alternatively contact resistance can be kept to a minimum by constructing the thermal bridge from elements of the same malleable conductive material and forcing the three elements together so as to effectively bond together without gaps, preferably with a bonding agent.

Thermal contact resistance between abutting metal parts can be very high and is due to air gaps, which can be present at a microscopic level. Contact resistance is reduced by: (a) exact fit of abutting parts, for example, perfectly flat plate to perfectly flat plate; (b) smooth surfaces; (c) high contact pressure: contact resistance between bare metal plates falls as contact pressure rises and falls to zero when cold welding pressure is reached; (d) a flowing filler or bonding agent: this fills the air gaps. To reduce resistance across the bond line, the bond line should be as thin as possible. For a given contact pressure, filler can reduce contact resistance between flat metal plates by a factor of up to 20.

By bonding metal to metal under pressure, contact resistance can be reduced to the point that a thermal bridge so constructed may be considered to be effectively seamless.

Assuming a thermal bridge of suitable geometry with no or negligible contact resistance, the effect of a bridge on the temperature drop across a cladding can be calculated. As an example, if one of the most conductive metals, copper, is used to bridge a 20mm soft wood panel, with 0.1mm layers of copper on each side, then only 1.1% of copper by volume can reduce the temperature drop by around 70%. This is a dramatic change for only a small quantity of copper.

Comparing ratios of thermal conductivity to cost per volume, it can be shown that the preferred material for a thermal bridge is aluminium. For example, this ratio for aluminium compared with copper is around 8. By using aluminium in efficient thermal bridges, a few % of metal can achieve large reductions in temperature drop, as confirmed by the following trials.

### Trials

### Plasterboard

Commercial honeycomb made of 0.07mm aluminium alloy foil was embedded in plaster and 0.05mm high-purity aluminium foil was bonded to each side of the honeycomb using epoxy cement. The honeycomb was 2.4% by weight of the plaster/honeycomb composite, equivalent to 0.6% by volume. The block of plaster/honeycomb composite and an identical block also with facing foil but without the honeycomb were placed on the same heated plate. The heated plate was 5mm aluminium over a serpentine of constant output resistance wire. The samples were fixed to the plate using mastic and the temperatures were measured using K thermocouples in mastic.

The temperature drop across the plaster/honeycomb composite was around 70% less than the temperature drop across the same thickness of plaster alone (ie the effective conductivity of the plaster was increased by a factor of 3x).

A similar trial using rectangular aluminium spirals embedded in plaster gave a similar result.

### Engineered wood floorboard

An engineered floorboard 125mm wide was created from a top 'veneer' of 3.8mm plywood and a core of 12mm MDF. The MDF was split into two longitudinal sections and each section was wrapped in a 0.15mm layer of high-purity aluminium foil, crossing the thickness of the MDF only on the inside of the board. The volume of aluminium used was 2.7% of the total volume of the board. The temperature drop across the modified floorboard was reduced by approximately 50% compared with the untreated floorboard.

### Carpet underlay

10mm rubber crumb carpet underlay was completely wrapped in 100mm sections with soft 0.05mm aluminium tape and the sections were then taped together. The volume of aluminium used was 1.1% by volume of the taped underlay. The temperature drop across the underlay was reduced by 50% at the section seams and by 16% at the section midpoints or around 30% on average.

### Temperature drop across common cladding

Heat flow rates of 50-100 watts per m² of floor area are representative design flow rates for houses. Applying these rates to cladding of standard thickness and thermal conductivity, temperature drops across such cladding can be estimated. The results are:
12.5mm plasterboard: 3.5 to 7 °C; 40mm wet screed: 2 to 4 °C; 40mm dry screed: 4.5 to 9 °C
12mm MDF (fibreboard): 6 to 12°C; 19mm chipboard subfloor: 13.5 to 27°C;
15mm OSB sheathing: 6.3 to 11.5°C; 14mm engineered floorboard: 5 to 10 °C;
laminate floorboard: 4 to 8°C; 6mm rubber sponge underlay: 3.5 to 7.0 °C;
11mm tufted carpet: 5 to 10 °C

Using thermal bridges according to the present invention and using small percentages by volume of aluminium, temperature drops across individual cladding layers can be cut by a significant amount with equivalent savings in the required operating temperature of the LTHRS.

### Prior art

Although relevant invention dates to at least 1974 (Bosch, DE7408063), prior art does not describe thermal bridges for interior cladding that are sufficiently efficient, cost-effective and manufacturable. The following patents have been considered: EP0133631, 1983 (Evans) ; EP0089012, 1983 (Wenger); EP0859200 (Volke); JP2011030696 (FUKASHIRO); DE3511510, 1986 (Wenger); DE3710060, 1987 (Wenger); DE3211970, 1983 (Pirchl); DE2535522, 1975 (Pruefling); DE2538830, 1977 (Hahn); DE2621938, 1977 (Hahn); NL1034848, 2007 (Senden); US59311381, 1997(Fiedrich); US2010/0313504 (Li); US2012/0301727(Chul et al); US2013/0099013 (Asmussen).

Significant patents include Wenger DE3710060, filed 1987. A composite insulating panel is constructed from elements wrapped at intervals with conductive sheet and bonded together so that the wrapped sheet is in thermal contact with upper and lower conductive surfaces.

The use of upper and lower conductive sheets is redundant and therefore an unnecessary cost, both in materials and in manufacturing complexity. There is also an avoidable thermal contact resistance between the upper and lower conductive surfaces and the wrapped sheet. The heat-transfer capacity of the thermal bridge is limited by the number and size of pieces of insulating panel that it is economical to cut up, and by the effect on mechanical properties. There is wastage in cutting up the panel and additional expense in cutting it and bonding it back together.

### Advantages of invention

The present invention significantly improves on prior art by: (a) using thermal bridges of high efficiency and low cost; (b) with minimal material wastage; (c) with minor modifications to the standard manufacturing and installation processes for such cladding; (d) without significantly compromising the desired properties of the cladding: for example, strength.

### SUMMARY OF INVENTION

The present invention relates to a cladding for the interior surface of a living space as defined in the appended claims, said cladding being used for radiant heat transfer. It comprises a rigid or pliable interior cladding for the floor, wall or ceiling of a domestic or commercial living space that is part of the thermal path of a radiant heating or cooling system is constructed with thermal bridges: using material of higher thermal conductivity to bypass the thermal resistance of material of lower thermal conductivity.

The present invention describes the construction of thermal bridges that:
- Use the shortest possible thermal shunts ie shunts that are substantively at right angles to the plane of the cladding.
- Use heat-collecting layers and heat-dispersing layers that are parallel to the cladding surface and on the surface and preferably covering most of the surface.
- As a consequence of 2 and 3, use thermal bridges of substantively rectangular shape.
- Use continuous, seamless material for shunt and heat-conducting layers so that contact resistance in the bridges is nil. Otherwise, contacting elements of the bridge are pressed together and bonded in place under significant pressure, where this means at least 50 psi and preferably over 500 psi.
- Are arranged in a uniform planar array.
- Are installed in cladding preferably as an integral part of the standard cladding manufacturing process.
- Have an open structure, meaning a geometry that allows mouldable material to flow through a uniform arrangement of gaps in the bridges and so to form a uniform coherent mass that protects the structural integrity of the cladding.
- Use primarily aluminium for the material of the thermal bridges.

Corresponding adaptations of standard cladding manufacturing processes are also described.

The appropriate embodiment of thermal bridging varies with the size of the cladding element, the manufacturing process and the rigidity of the element. For example, plasterboard is a rigid cladding in the form of relatively large panels, constructed by moulding. Composite wood panels such as fibreboard and chipboard are moulded under high pressure. Timber flooring is an example of rigid cladding in the form of relatively small units (planks) constructed by dividing up larger pieces of material. Carpet underlay is an example of flexible cladding made in large continuous sheets. These claddings are addressed by embodiments of the present invention. In each case the aim is to make the incorporation of a thermal bridge into the cladding an easy adaptation of current manufacturing processes.

### Plasterboard

### Honeycomb

In an embodiment of the present invention, a uniform density of perpendicular thermal shunts is achieved by embedding high-purity aluminium honeycomb inside plasterboard, with the thickness of the honeycomb panel equal to the thickness of the plasterboard panel. Aluminium honeycomb is an affordable solution since it is mass-produced by a simple process from bonded foil, mainly for constructing strong but light composite panels. To improve rigidity, the foil is usually an alloy. Adhesion between the foil and the plaster can be improved by treating the surface of the foil, for example, by abrasion, by anodizing or by phosphating and by adding adhesive polymer to the plaster. Perforations in the foil used to construct the honeycomb allow mechanical bridging of plaster between honeycomb cells. A minor modification of manufacturing process allows aluminium honeycomb to be embedded in the plaster. Plasterboard is manufactured by grinding and calcining gypsum, mixing the powder with fibres of wood, paper or glass and other additives, adding water, extruding a layer of wet plaster paste on to a lower layer of paper, feeding through rollers with an upper layer of paper, slicing into panels and drying the panels. The lower and upper layers of paper are replaced or supplemented by flexible heat-conducting materials that act as heat-collector and heat-diffuser. To enable drying of the wet plaster, the material must also be permeable to moisture. In an embodiment, the lower and upper layers are fine paper laminated with inner surfaces of perforated aluminium foil. Metallized or graphitized paper or fabric can also be used. The moving lower layer of perforated aluminium foil is coated with adhesive. Honeycomb panels are fixed to the foil. Wet plaster is poured over the honeycomb. Vibration ensures that the plaster paste fills the honeycomb without voids. The upper layer of perforated foil is also coated with adhesive and is pressed on the top of the honeycomb.

### Rectangular spirals

In another embodiment of the present invention, rectangular spirals of aluminium wire or strip are embedded side by side in plaster, with the depth of the spirals equal to the thickness of the finished plasterboard. The portions of the spiral that span the depth of the plaster serve as a thermal shunt; the outer edges of the spiral serve as heat-collecting and heat-dispersing layers.

### Rectangular loops or rolls

In another embodiment, rectangular loops of aluminium wire or strip are constructed by weaving. In effect, the coils of a spiral are displaced at right angles to the spiral axis so that the spiral loops are edge to edge. A parallel series of such loops can be held in place by wires woven at right angles to the loops. In this manner, a linked planar array of rectangular loops is constructed. Alternatively, the rectangular spirals can be replaced by rectangular rolls made of sheets of woven wire or tape or by sheets of expanded mesh or by perforated sheets.

### Rectangular corrugated mesh

In another embodiment of the present invention, a roll of flat aluminium mesh is fed into crimping rollers to produce a corrugated mesh with a depth of corrugation equal to the thickness of the finished plasterboard. The corrugated mesh is fed on to the lower layer of paper. The wet plaster paste flows through the mesh and the manufacturing process is completed as already described.

The walls of the corrugation serve as a thermal shunt and the extremes of the corrugation serve as heat-collecting and heat-dispersing layers.

### Mesh and expanded mesh

A mesh means any material in the form of a sheet covered in a dense uniform array of apertures. A mesh may be made by weaving wire, strip or fibre (there are multiple weave patterns), by twisting wire, by welding wire, by perforation of sheet or by slitting and expanding sheet.

In its most common form, expanded mesh is made by slitting metal sheet to create a pattern of staggered parallel slits. By stretching the sheet at right angles to the slits, a uniform lattice is formed, comprising curved strands surrounding rhomboidal apertures. The curved strands alternately curve above and below the plane of the mesh. This is called a raised expanded mesh. If this raised mesh is used directly to make a corrugated thermal bridge, the thermal path through the shunt follows the curves of the strands. This thermal path can be made significantly shorter, improving heat transfer, by flattening the mesh, for example by passing the mesh through rollers. Manufacture of such mesh is simple and low cost with negligible material wastage.

### Raised mesh

A raised expanded mesh can be incorporated directly in a moulded panel to form a thermal bridge. The thickness of such raised mesh varies with the length of the slits made before expansion. As an example, a raised aluminium mesh is made with the same thickness as finished plasterboard. The mesh is placed on a paper layer and wet plaster is poured on to the mesh. Due to the open structure of the mesh, plaster fills all the voids between the metal. Manufacture of the plasterboard then continues in the normal way.

### Rectangular loop pressed sheet

In an embodiment of the current invention, rectangular loops are pressed from aluminium sheet. Aluminium sheet is slit into a uniform array of pairs of slits. The sheet between each pair of slits is pressed at right angles to the plane of the sheet so that this portion of sheet is drawn into an open rectangular loop, forming a planar array of rectangular loops seamlessly connected to a planar base. The height of the loops is the same as the thickness of the finished plasterboard. The manufacturing process for this looped pressed sheet is simple and material wastage is insignificant.

The looped pressed sheet is placed on the plasterboard platform with the loops facing upwards and wet plaster paste is poured around the loops, flowing through the loops, until the top surface of the loops is aligned with the top surface of the wet plaster. The plasterboard manufacturing process is then completed. The result is a uniform array of seamless rectangular thermal bridges through the panel. If the loops are stretch-formed, then the geometry of the loops is limited by the elongation of the aluminium alloy used. This can be up to 25%. The length of a rectangular loop is the length of the pair of slits plus 2 x the thickness of the panel. If, for example, the panel is 12mm thick, then the required length of the slits, L, is given by: 24/ L = 0.25 or L = at least 96mm

### Flapped pressed sheet

In an embodiment of the current invention, rectangular flaps are pressed from aluminium sheet.

Aluminium sheet is slit into a uniform array of pairs of slits and each pair of slits is joined at one end by a cut at right angles to the slits. The result is a cut in a rectangular U-shape. The sheet between each pair of slits is pressed at right angles to the plane of the sheet so that this portion of sheet becomes a vertical flap, so forming a planar array of vertical flaps seamlessly connected to a planar base. The height of the flaps exceeds the thickness of the finished plasterboard. The manufacturing process for this flapped pressed sheet is simple and material wastage is insignificant.

The flapped pressed sheet is placed on the plasterboard platform with the flaps facing upwards and wet plaster paste is poured around the flaps until the required thickness of paste is achieved. At this point the flaps project vertically from the surface of the paste. By moving the paste layer under a roller, the exposed vertical section of each flap is bent over and flattened against the upper surface of plaster. The result is an array of rectangular thermal bridges (each rectangle is of course missing one side). Depending on the orientation of the flapped pressed sheet relative to the roller, each flap and its connecting base sheet forms either a rectangular C-shape or a rectangular S-shape. The plasterboard manufacturing process is then completed.

As an alternative, the exposed sections of each flap are not bent over until the plaster has set. In this case a more rectangular profile may be achieved, but an adhesive layer must be added to the flaps so that the flaps can be laminated to the surface of the dry plaster.

The result is a uniform array of seamless rectangular thermal bridges through the panel.

### L-shaped strips

In an embodiment that closely resembles the use of flapped pressed sheet, L-shaped strips of aluminium mesh or of aluminium sheet or of perforated aluminium sheet are bonded in a uniform array to the lower layer of plasterboard paper before the plaster paste is added. The upright portions of the L-shaped strips are equivalent to the flaps described in the last section.

### Embedded cuboids

In another embodiment of the present invention, heat-conducting elements with a diameter equal to the thickness of the plasterboard are dispersed in the wet paste.

Suitable shapes for such an element have open geometries, allowing bridging of plaster across the metal/plaster matrix. Again a rectangular profile is desirable so that a complete thermal bridge is constructed out of continuous heat-conducting material. This can be achieved with, for example, a wire cuboid or a cuboid cylinder. If the cylinder has a square cross-section and is elongate and is wrapped round its circumference with heat-conducting sheet, it will automatically orient itself on a flat platform so that the sheet provides a rectangular thermal path. Shapes can be constructed so that they have asymmetric density (for example, by wrapping a cylinder in 1.5 rotations). These shapes will orient themselves uniformly if vibrated on a tray. To avoid air bubbles inside the shapes, they can be pre-filled with plaster before the main manufacturing process. Spherical heat-conducting shapes can provide a short thermal path regardless of orientation. Possible alternative shapes include a spiral with spherical outline, or a sphere made of wire hoops, or a wire cube or a wire tetrahedron.

The result is a dispersed array of approximately rectangular seamless thermal bridges. A uniform array of such cuboids can also be arranged.

### Wrapped sections

In another embodiment, the thermal shunt is added after a plasterboard panel has been made, by wrapping segments of the panel in a heat-conducting layer.

A heat-conducting layer is wrapped round the edges of the panel and laminated to each side of the panel. In this way, the three elements of the thermal bridge are made out of a continuous piece of material. Standard plasterboard panels are too wide at 0.6 to 1.35m to be effectively bridged by thermal shunts on the edges of the panel alone. In an embodiment of the present invention this problem is solved by: (̅
a) cutting the panel into narrower sections or making narrower sections;
(b) wrapping heat-conducting foil round each section and bonding the foil to the plaster;
(c) bonding the sections back together.

In a related embodiment, narrow sections of finished plaster are wrapped in heat-conducting foil and these segments are fed back into the plasterboard manufacturing process. If the foil is spiral or perforated, there is a mechanical bridge between old and new plaster. This is equivalent to the method of embedded pre-filled cuboids described in the previous section.

### Other moulded cladding

Plasterboard is an example of a cladding produced by moulding. The methods described for thermal bridging of plasterboard are applicable to other similar moulded cladding: for example, products containing: (a) clay, cement or other minerals; (b) wood, bamboo, paper, straw, wool or other natural fibres; (c) rubber or other elastomers; (d) plastics.

### Screed

A significant number of present radiant heating systems consist of under-floor tubing carrying hot water, with the tubing embedded in a so-called wet screed that is mixed and applied in situ and allowed to set. Wet screed is a setting layer like plasterboard and the thermal bridges applicable to plasterboard are also applicable to screed.

### Rectangular spirals

As an example, before pouring the screed, rectangular spirals of aluminium are laid across the heating tubes in a uniform pattern at right angles to the tubes. The spirals have a height equal to the desired depth of screed above the tubes. The spirals can be held in place temporarily by gravity, for example by dense rods arranged inside the spirals. The spirals can also be held in place temporarily by using dabs of tacky adhesive placed on each end of a spiral where it contacts the tubing. Wet screed is then poured over and into the spirals, so that when the screed layer is complete, the upper surface of the spirals is continuous with the upper surface of the screed. The result is a uniform array of seamless rectangular thermal bridges across the screed.

The spirals can be pre-filled with set screed. The spirals can be substituted by rectangular cylinders of flat aluminium mesh. The spirals can also be substituted by an aluminium mesh that is folded into a planar rectangular corrugation. A suitable mesh is made by flattening expanded aluminium.

Dry screed panels can also be thermally bridged in the same way as plasterboard.

### Moulded cladding with compression

Plasterboard is an example of a moulded, setting cladding that does not require compression during manufacture. Other forms of moulded cladding, including wood composite (or engineered wood) panels - for example, medium-density and high-density fibreboard (MDF and HDF), chipboard and oriented strand board (OSB)- involve compression.

### Wood composite manufacturing

The above-named wood composite claddings have similar manufacturing processes: wood particles or pieces are cut, sieved, dried, combined with resin, formed into a mat on a forming line, which can be a horizontal plate or belt, and compressed in a hot press at a temperature of 150-250 °C and a pressure of 200 to 1000 psi. The hot press may be preceded by a cold press that expels air from the mat. The hot press may also be preceded by a pre-heater that accelerates the press cycle. For special applications, other materials may be added to the wood particles: for example, to protect against water, fungal attack, insects and fire. A primary difference between these wood composite products is in wood particle geometry. Wood particles for MDF and HDF are fine wood fibres generally with a length from 1 to 5mm and a diameter of under 0.1mm. Such fine particles compress into a dense uniform board that is easily machined. It is widely used for interior furniture and doors. It is also used in cladding for walls and ceilings, usually covered with a veneer. It can be moulded to form shaped skirtings, architraves and window boards and for decorative effect. It is also used as core material in laminate flooring.

Wood particles used in chipboard are typically much larger than used in MDF and HDF, with length in the range 2 to 15 mm and a diameter of 0.2 to 1.2mm. The mechanical and decorative properties of the panel are improved by a density gradient across the panel, with finer particles in the outer layers. Finer particles can be separated by blowing or sieving. An array of rotating discs may also be used to orient the coarser wood material. Chipboard is less dense than fibreboard. It has similar uses. For example, faced with melamine it is used for furniture. It is also widely used for subfloor and roofing.

An OSB panel consists of mats of wood flakes (or strands) that are much larger than the particles in chipboard. Strands are cut to controlled dimensions - usually up to 150mm long and 25mm wide- from debarked small diameter logs. The strands are sifted and dried, treated with resin and conveyed to a forming line. Usually an OSB panel has three layers: outer layers sharing a common orientation of the grain in the strands and an inner core layer in which the grain of the strands is generally at right angles to the grain in the outer layers. The three layers are hot-pressed together.

OSB is stronger than chipboard and is a cheaper substitute for plywood. It is used in load-bearing applications, for example as subfloor or as components of bracing and I-beams.

### Inserting thermal bridges during manufacture

In all these instances of wood composite cladding, a description is given here of thermal bridges inserted during manufacture using minor variations of standard manufacturing processes. The advantages gained include low cost and low material wastage. By using thermal bridges with an open geometry, the wood composite retains its coherent structure and the mechanical properties of the cladding are not significantly compromised. Where aluminium thermal bridges are embedded in wood composite panel, the panel containing aluminium thermal bridges can be sawed and nailed and machined in a normal fashion.

### Bridges effect on productivity, quality

Thermal bridges inserted during manufacture of wood composite can improve the productivity of the fibreboard production line because the improved heat transfer to the middle of the compressed mat speeds up the resin hardening. Product quality can also be improved using thermal bridges because faster, more even heating provides a more uniform product. Slow pressing times for thicker panels - up to 10 minutes per batch for panels over 12mm - are considered to be a problem in the moulded panel industry. See, for example, comments in US 20130048190 (Gupta et al).

Because the thermal bridge is incorporated before compression and resin hardening, it forms part of a coherent mass and so avoids significantly compromising the mechanical properties of the panel so made.

### Protecting the press

In moulded wood production lines, metal detectors and magnets are used to find and remove any metal accidentally included in the formed mat. Therefore any metal thermal bridges incorporated in the mat should be added after unwanted metal has been detected and removed. The purpose of metal removal is to prevent damage to the moving parts of the line and especially to the presses. The thermal bridges used must be primarily of relatively soft material, such as aluminium, to avoid such damage. As additional protection, a replaceable shield layer, for example, a sheet of hardened steel, can be placed on the forming platform and/or on top of the mat. Where protection is required for a woven belt in a cold press, the shield layer can be perforated to allow removal of air in the mat, for example using a fine, flexible steel mesh.

### Effect of compression

In the above-mentioned products, the mat is compressed by a ratio of 5-10 x in the hot press. As a result, any thermal bridge placed in the mat before pressing may be subject to significant deformation. The deforming behavior will vary by type of product. In the case of fibreboard, the homogenous mass of fine fibres can flow round the thermal bridge. Consequently, it is possible to insert into the fibre mat thermal bridges that have dimensions fitting the final thickness of the panel and to compress the mat without significant crushing of the bridges. In the case of chipboard and OSB, the non-homogenous arrangement of larger particles impedes penetration of the mat by the thermal bridge. One solution to this problem is to insert an over-sized thermal bridge into the mat and to allow this to be crushed by pressing.

### Penetrating thermal bridge

Another solution is a penetrating thermal bridge. The compressive force of the cold or hot press can be exploited to create a substantively rectilinear thermal shunt in compressively moulded cladding by placing suitable heat-conducting shapes in and on the mat. When compressed, these shapes penetrate the mat, are forced into intimate contact with each other, and are fixed in position by curing a binding agent. Bonding under pressure can greatly reduce contact resistance. Suitable shapes can be arranged to create a uniform array of substantively rectangular, effectively seamless thermal bridges.

### Aluminium adhesion

In all these instances, where aluminium is used for the thermal bridges, the embedded thermal bridges preferably constitute an open structure, permitting formation of a coherent mass of cured wood composite. This is because binding agents commonly used in wood composites - for example, urea formaldehyde resin - do not provide a wood-metal bond that is as strong as a wood-wood bond. To improve wood-metal adhesion, the resin can be modified (suitable commercial products are available) and the surface of the aluminium can be treated for example, by anodizing or with phosphonic acid, and precoated with resin. Suitable heat-cured adhesives for aluminium include single component epoxies and polyurethane glues: these can be used as the binding agent for the wood composite.

### Fibreboard

A thermal bridge can be constructed in fibreboard using the methods already described for plasterboard.

### Honeycomb

In an embodiment of the present invention, a sheet of aluminium honeycomb having a height equal to the thickness of the finished fibreboard panel is bonded to a flat aluminium sheet that rests on the forming platform. Fine resinated wood fibres are poured over the honeycomb until the full height of the mat is reached. Then the mat is covered by a second flat aluminium sheet that carries a curable adhesive layer. During hot pressing, the honeycomb is forced into intimate contact with the upper flat aluminium sheet and is bonded in place, so that thermal contact resistance is low. The result is a uniform array of effectively seamless rectangular thermal bridges across the panel.

To avoid shear forces on the honeycomb, any pre-pressing is preferably carried out with a vertically operating press.

### Rectangular spirals

As an example, a uniform planar array of spirals of aluminium wire is placed on the forming platform. The axes of the spirals are aligned with one of the sides of the panel being produced. The spirals are rectangular in cross-section with a height equal to the thickness of the final panel. One face of the rectangular spirals is against and parallel to the forming platform. Fine wood fibres are poured on to the spirals, flowing between and over the spiral coils. After hot pressing, portions of the spiral wire are on the two surfaces of the panel and parallel to the plane of the panel. These portions of the spirals act as heat-collecting and heat-diffusing surfaces. This surface wire is joined seamlessly by wire that is straight and perpendicular to the mat, acting as a thermal shunt. The result is a uniform array of rectangular and seamless thermal bridges across the panel.

The spirals can be made crush-resistant by selecting a strong aluminium alloy and by increasing the wire diameter. The wire can also be flattened vertically to align with the motion of the press.

Spirals can be substituted by woven rectangular loops or by rectangular rolls of mesh.

### Rectangular corrugated mesh

Mesh with rectangular corrugations can be made crush-resistant. A sheet of such corrugated mesh made with a height equal to the thickness of the finished panel can be embedded in the pre-press mat. On pressing, the fine fibres flow through the apertures of the mesh and the mesh does not deform. On hot pressing, the mesh is fixed in place by curing of the binding agent, resulting in a uniform array of seamless rectangular thermal bridges across the panel.

### Rectangular loop pressed sheet

A sheet with pressed rectangular loops can be made crush-resistant, for example, by twisting the loops so that the loops have edges aligned with the motion of the press. A sheet of such loops made with a height equal to the thickness of the finished panel can be embedded in the pre-press mat. On pressing, the fine fibres flow round the loops and the loops do not deform. On hot pressing, the loops are fixed in place by curing of the binding agent, resulting in a uniform array of seamless rectangular thermal bridges across the panel.

### Embedded cuboids

Dispersed heat-conducting shapes can be made crush-resistant by, for example, pre-filling such shapes. For example, fibreboard can be pressed in the form of fibreboard rods with a square cross-section. Aluminium sheet is wrapped round the rods, for example, in a continuous spiral and bonded to the rods. The rod is cut into sections, forming elongated cuboids wrapped in aluminium, the wrapped cuboids having a height that equals the thickness of the finished panel. The wrapped cuboids are arranged in a uniform planar array on the forming platform or simply dispersed uniformly on the forming platform, noting that elongated cuboids are self-righting. Fibres are poured on to the cuboids and, on pressing, flow round them. On hot pressing, the cuboids are fixed in place by curing of the binding agent, resulting in a uniform or dispersed array of seamless rectangular thermal bridges across the panel.

Pre-filled cuboids can be filled with conductive material. For example, conductive porcelain can be pressed and fired in the form of cuboids that are then wrapped with aluminium sheet.

In all these instances of crush-resistant thermal bridges, the fibres must be able to flow round the bridges during pressing. This flow can be improved by adding lubricants in the pre-press mat: for example, by suspending the wood particles in water as is done in the so-called wet-manufacturing process used for making fibreboard. This wet process is similar to the dry process, except that the pre-press mat is drained before hot pressing.

### Deformed spirals

Instead of using crush-resisting thermal bridges, the elements of the thermal bridge can be deliberately deformed. As an example and as an alternative embodiment of the present invention, a uniform array of aluminium spirals is placed on the forming platform. The spirals are circular in cross-section and have a diameter exceeding the final thickness of the panel. Fibres are poured into and over the spirals to from a mat. Hot-pressing deforms the circular spirals into flat ovoid spirals that bridge the final panel. The initial spacing of circular spirals on the forming platform determines the gaps between flat ovoid spirals in the final panel. The spacing can be selected so that the ovoid spirals are separated or abut each other or intersect.

The spirals described above can be made of aluminium strip. Spirals can be substituted by rolls that are constructed of folded perforated sheet or folded woven aluminium wire or strip or folded expanded aluminium mesh.

With preferred spacing of the spirals, the ovoid spirals press together to form substantively rectangular spirals. With wider spacing, additional thermal shunts or wood particles can be placed on the forming platform between the spirals before pressing.

### Penetrating pressed sheet

As an example of a penetrating thermal bridge and as an embodiment of the present invention, penetrating members (teeth, edges or spikes) are pressed from aluminium sheet and are continuous with that sheet. In an instance, aluminium sheet is slit into a uniform array of cross-shaped slits. Each cross of slits is pressed at right angles to the plane of the sheet to form four vertical V-shaped teeth, where the angle of the V is a right angle. By crossing three cuts and pressing, six teeth are formed each with a V-shape of 60 degrees. By using more cuts, more teeth can be formed.

Alternatively, aluminium sheet is slit in an array of pairs of slits and each pair of slits is joined in the middle by a right-angle cut, a diagonal cut or by a zigzag cut. When the sheet between the cuts is pressed at right angles to the plane of the sheet, vertical flaps are formed with straight, guillotine and saw-tooth profiles respectively.

In all these instances, to enable effective penetration of the mat without deformation of the thermal bridge: (a) the pressed sheet can be made of a hard alloy such 2000 series or 7000 series aluminium: these alloys can contain up to 15% of other metals, notably including copper and zinc respectively; (b) the aluminium sheet can be cut at an angle so that the edge of the penetrating member is sharp; (c) before cutting the aluminium sheet, each area to be cut can be stretch-pressed into a curve, so that each penetrating member is curved around the vertical axis.

In all these instances, the manufacturing process for the penetrating pressed sheet is simple and material wastage is insignificant.

In all these instances of penetrating pressed sheet, it is preferable to have a pattern of pressing that is staggered to avoid forming aligned cuts in the panel with consequent weakening.

In all these instances, the height of the penetrating members is at least the thickness of the final panel.

Aluminium sheet is placed on a protective plate on the forming platform and wood fibre is poured on to the sheet until the mat has reached its desired thickness. Preferably the aluminium sheet is a malleable alloy. The protective plate can be a thin panel of wear-resistant hardened steel. Such steel can have a Mohs hardness that is up to three times higher than aluminium. The penetrating pressed sheet is placed on top of the mat with the penetrating members facing vertically downwards. During hot pressing the penetrating members are driven into forceful contact with the lower aluminium sheet. Edges penetrate the lower aluminium sheet and are moulded into the sheet by the hard protective plate. The assembly is fixed in place by curing of the binding agent.

The result is a uniform array of effectively seamless rectangular thermal bridges through the panel.

### Pressing with soft resilient layer

In an alternative adaptation of the standard manufacturing process, the panel is pressed using a soft resilient layer. Penetrating pressed sheet is arranged on a forming platform, with penetrating members pointing upwards. The fibre mat is placed on the array of members. On top of the mat is a plain aluminium sheet and on top of the sheet is a soft resilient layer and above this layer is a hardened steel plate attached to the top face of the press. The penetrating members are longer than the final thickness of the panel. In a cold press cycle, the members pierce the mat, the aluminium sheet and the soft layer to create an array of members that project through the aluminium sheet. The soft layer is removed and the upper surface of the aluminium sheet is sprayed with bonding agent. The array of projections is folded over by a roller and then the panel is hot-pressed so that the projections are laminated to the aluminium sheet. Bonding of aluminium under pressure reduces the contact resistance to a low value. The soft layer is usable for a limited number of press cycles and should be cheap. As an example, the soft layer can be a resilient natural or mineral felt. The used felt retains value as material for insulation and as filler for composite board.

By using a sufficient density and length of penetrating members, the folded over members can act as a heat-collecting or diffusing layer, so that the upper aluminium sheet can be omitted. This solution is a variant of the flapped pressed sheet method described under plasterboard. Because this version of thermal bridge is seamless, there is no contact resistance.

### Chipboard

Variations of the methods described so far can also be applied in the manufacture of chipboard.

The larger and elongate particles of chipboard prevent the easy flow of particles around an embedded thermal bridge. Solutions include thermal bridges with crushed shunts and penetrating bridges.

### Deformed spirals

As an example of a crushed thermal bridge, a uniform and aligned array of rectangular spirals of aluminium wire is placed on a forming platform. The spirals are preferably oriented to reduce interference with elongate particles in the core of the mat. The axes of the spirals can be at right angles to the preferred orientation of the elongate particles, with gaps between spiral turns sufficiently wide to enable migration of elongate particles into the gaps. Alternatively the axes of the spirals can be aligned with the elongate particles and the spirals are prefilled with particles. The height of the spirals initially equals the height of the mat. Hot pressing deforms the vertical portions of the spirals. The result is a uniform array of seamless thermal bridges with rectilinear heat-collecting and heat-dispersing surfaces.

### Penetrating bridges

All the instances of penetrating bridges already described under fibreboard are applicable.

### Oriented Strand Board (OSB)

The thermal bridging methods described in the case of chipboard above can also be applied in the manufacture of OSB.

### Deformed spirals

The combination of the three layers with differing strand orientation makes it difficult to incorporate a single continuous thermal bridge that does not interfere with the mechanical properties of at least one layer of the OSB panel. In an alternative embodiment of this invention, pre-filled circular spirals of aluminium wire or strip are placed in each layer of the uncompressed mat, with the height of the spirals at least equal to depth of the mat in which the spiral is embedded. Adjacent layers have spirals with axes at right angles. Hot pressing deforms the circular spirals in each layer to flat ovoid spirals, The ovoid spirals in adjacent layers are forced together and fixed in place by curing of the binding agent. The result is a uniform array of effectively seamless and substantively rectangular thermal bridges across the three layers.

Perforated cylinders can be substituted for circular spirals. In this case, pre-filling can be achieved by folding perforated sheet into a curved trough, filling the trough with strands that are generally aligned with the trough and folding the trough into a cylinder. The perforated sheet can, for example, be flattened expanded aluminium mesh.

### Penetrating pressed sheet

All the instances of penetrating bridges already described under fibreboard are applicable.

Such bridges may be applied across all the OSB layers at one time or separate bridges may be installed in each layer and then forced together.

In an example, a penetrating pressed sheet of aluminium, with upright penetrating members, is placed on the forming platform and three layers of strands are poured on to the sheet. An aluminium mesh is placed on top of the mat. During hot-pressing, the strands are penetrated, these penetrating members come into forceful contact with the upper aluminium layer and are fixed in place by curing of the binding agent. The result is a uniform array of effectively seamless and substantively rectangular thermal bridges across the three layers.

In an alternative example, an aluminium sheet is placed on the forming platform. The lower layer of strands is poured on to this sheet. A penetrating pressed sheet of aluminium is placed on this lower layer with penetrating members pointing downwards and these members having edges aligned with the general orientation of strands in the lower layer.

The middle layer of strands is poured and a penetrating pressed sheet of aluminium is placed on this middle layer with penetrating members pointing downwards and these members having edges aligned with the general orientation of strands in the middle layer.

The upper layer of strands is poured and a penetrating pressed sheet of aluminium is placed on this upper layer with penetrating members pointing downwards and these members having edges aligned with the general orientation of strands in the upper layer.

During hot pressing, the members penetrate the layers of the mat and are forced together and in the lower layer, members are forced against the lower sheet, and fixed in place by curing of the binding agent. The result is a uniform array of effectively seamless and substantively rectangular thermal bridges across the three layers.

### Plywood

Plywood is used in floors, walls and ceilings. As an example, plywood provides a stabilizing layer for floor coverings such as tile and linoleum. Where there is under-floor radiant heating this layer represents a significant thermal resistance, which can be reduced by thermal bridging.

Conventional plywood is not a moulded product. Instead it is produced by peeling veneer from rotated logs and gluing veneers together at temperatures of at least 140°C and pressures of 80 to 300 psi. Again there is an opportunity to use this compression to form an effective thermal bridge across the plywood panel.

### Penetrating pressed sheet

In an embodiment of the present invention, before pressing, a stack of veneers is placed on a sheet of aluminium. On the upper face of the stack of veneers is arranged a penetrating pressed sheet of aluminium with penetrating members pointing downwards. In the hot press, the troughs are driven through the veneers into forceful contact with the lower aluminium sheet and fixed in place. The result is a uniform array of seamless rectangular thermal bridges.

To assist penetration, veneers can be temporarily softened, for example by spraying with an aqueous solution of plasticizer. By staggering the array of penetrating members in both dimensions of the panel, the risk of splitting a veneer is reduced.

### Engineered wood floorboard

If cost and low thermal resistance were the only criteria, most floors would be covered by thin vinyl. Aesthetic appeal means that wood flooring is often preferred in domestic living spaces. But wood is a thermal insulator. At peak heat flows, the temperature drop across a thick wood floor can rise to over 9 °C. Since the surface temperature needs to be around 21-23 °C, this requires a subsurface temperature over 30 °C, exceeding the limits set by most wood-floor suppliers to avoid potential problems of warping. European regulations, dating to 2001, limit the temperature drop across the floor, including any underlay or further covering, to 7.5 °C. The problem is worsened by use of rugs. The warping risk is greatly reduced by using an engineered wood floor, comprising an upper veneer of hardwood bonded to one or more lower layers of less expensive softwood, plywood or fibreboard. But the large temperature drop remains and this reduces the efficiency of the heating system.

### Thermal bridging

In an embodiment, engineered wood floor is thermally bridged by using thermally bridged wood composite such as high density fibreboard for the layers below the hardwood veneer. Any of the methods already described for bridging wood composite can be used. The composite can be moulded to be the entire layer below the hardwood veneer, including moulded tongue and groove.

### Moulded ceramic bridge

In another embodiment, layers of wood below the hardwood veneer are bridged by heat-conducting ceramic. For example, the thermal conductivity of porcelain of standard commercial composition can be improved to K = 2 watts/m°C by extended heating at higher than normal temperatures. The result is inexpensive porcelain with increased density and lower porosity. This is 20 x the thermal conductivity of, for example, pine. Therefore a thermal shunt of porcelain bridging just 5% of the area of a softwood layer can halve the temperature drop across this layer. The ceramic thermal shunt can be bonded to a heat-collecting layer and a heat-dispersing layer that are both aluminium sheet. This embodiment can be described as a tile/board hybrid: having the desirable thermal properties of tile combined with the desirable appearance and handling of tongue and groove floor board.

### Wrapped sections

In another embodiment, engineered wood floor is thermally bridged by: (a) dividing the lower layers of the floorboard into elongate sections; (b) wrapping aluminium sheets round each section and bonding the sheets to the wood; (c) bonding the sections together. The three elements of the thermal bridge are all provided by the same continuous sheets.

By increasing the number (ie reducing the width) of the wrapped elongate bonded sections in a floorboard, the number of thermal shunts embedded in the floorboard is increased and the overall thermal path across the board is shortened, so improving heat transfer performance. However, the cost of manufacture and material wastage is also increased. Therefore it can be advantageous to use fewer elongate sections per floorboard and to fix additional thermal shunts between the bonded sections: for example, fixing moulded ceramic shunts between sections.

### Laminate floorboard

In another embodiment of the present invention, the cladding is a laminate floorboard. This differs from an engineered wood floorboard by not having a hardwood veneer. Instead, the upper surface comprises a decorative layer, usually simulating wood, protected by a transparent wear layer of paper impregnated with melamine resin. Below this is a core layer usually of fibreboard. Below the core layer is a stabilizing layer of resin-saturated paper.

Laminate floors are usually 8-10mm thick and can be up to 12mm thick. The wear layer is from 1 to 4mm thick and the decorative layer is 0.2-0.3mm thick.

An alternative laminate has an upper surface of decorative vinyl, a core layer of fibreboard, usually HDF and a lower layer of cork. The thickness of these layers is typically 2mm, 7mm and 1mm respectively. The options for thermal bridging of laminate floorboard are the same as the options for thermal bridging of engineered wood floorboard.

### Carpet underlay

Underlay for carpet improves 'feel', wear and insulation and under wood or laminate floors provides resilience, acoustic and thermal insulation and a buffer against an uneven subfloor. Such underlay is flexible and compressible and typically made of sponge or crumb rubber or plastic foam or wood fibre or felt. Typical underlay of this kind has a thickness from 2mm to 6mm under wood and 4mm to 12mm under carpet. The thermal conductivity of uncompressed nitrile rubber sponge is around 0.04 watts/m °C. The conductivity of plastic foam or felt can be less than this; the conductivity of a dense crumb can be slightly more.

### Thermal bridges for pliable cladding

A requirement for underlay is that the thermal bridges be pliable and compliant with repeated cycles of compression. Aluminium sheet is a suitable material, having a typical fatigue life of several million cycles. An embedded honeycomb is unsuitable since it cannot flex. Embedded wires are also unsuitable because the wires when flexing will tend to cut the surrounding material. Embedded thermal bridges described in previous sections are applicable, using flexible heat-conducting material, including:(a) rectangular spiral strips where the strips are wide and flat;(b) rectangular rolls of mesh;(c) rectangular corrugated flat mesh, for example, flattened expanded aluminium sheet;(d) rectangular folded L-shapes, including use of a flapped pressed sheet;(e) rectangular loop pressed sheet where the loops are wide;(f) embedded cuboids; (g) wrapped and bonded sections; (h) penetrating pressed sheet.

### Extruded underlay

In an example, underlay is manufactured by extruding foam plastic or rubber on to a moving belt and passing it through rollers. The plastic or rubber can be laminated with polymer or natural fibre layers.

In an example of the present invention, rectangular spirals of aluminium strip are fed on to the moving belt to form a uniform planar array. Foam is extruded on to the spirals and penetrates between the coils of the spirals. The spirals are the same height as the desired thickness of the underlay. The open structure of the spirals - ie the gaps between adjacent coils of the spirals - means that the cured foam of the underlay forms a continuous coherent mass. When the foam has set, the result is a uniform array of seamless rectangular thermal bridges across the underlay.

The spirals can be substituted by rectangular rolls of aluminium mesh, for example, flattened expanded aluminium. The spirals can also be substituted by a rectangular corrugated aluminium mesh or by a pressed aluminium sheet with rectangular loops or by a pressed aluminium sheet with flaps. In the last case, the flaps project above the foam layer. When the foam has set, the flaps are folded over by a roller to lie flat on the top surface of the foam layer.

Underlay is also manufactured by using granulating recycled rubber tires, or recycled plastic foam.

### Rubber crumb

In the former case, fine rubber granules (crumb) are mixed with aqueous latex and poured on to a textile or paper backing. The mixture is skimmed to the desired thickness and cured by heat. Aluminium spirals, mesh rolls, corrugated sheet or pressed sheet can all be covered by the aqueous latex-crumb mixture before curing to form uniformly distributed seamless rectangular thermal bridges across the underlay.

### Rebonded plastic foam

In the latter case, shredded foam is mixed with a polyurethane binder and compressed and cured. In a batch process, the mix is pressed in a cylindrical mould. The resulting solid cured 'log' is then rotated and peeled into layers by a cutter. In a continuous process, the mix is pressed between rollers and the solid cured sheet is peeled into layers. Individual layers may be laminated to a plastic film or non-woven backing. In a variation of this continuous process, cured sheet is produced at the desired thickness without peeling. This permits the underlay to be thermally bridged by the methods already described.

### Wrapped sections

Peeled foam underlay can be thermally bridged by cutting into sections, wrapping in aluminium sheet and bonding the sections back together.

### Penetrating pressed sheet using soft resilient layer

Peeled foam can also be thermally bridged by using penetrating pressed sheet as described under the fibreboard section. A layer of peeled foam is arranged on a penetrating pressed aluminium sheet, with the penetrating members pointing vertically up. These members are longer than the final thickness of the foam. On the upper side of the peeled foam is laminated a plain sheet of aluminium. On top of the aluminium is a layer of resilient felt, made, for example, of wool. The sandwich of felt, aluminium sheet, peeled foam and penetrating pressed sheet is compressed so that the penetrating members pass through the foam and the plain aluminium sheet and into the felt. After pressing, the felt layer is removed for later use, leaving penetrating members projecting through the foam. The upper surface of the plain aluminium sheet is sprayed with bonding agent. A roller is passed over the peeled foam and folds the projecting penetrating members on to the plain sheet. The sandwich is then pressed again and the folded members and sheet are bonded together under pressure.

Since both foam and felt are easily penetrated, the required penetrating pressed sheet can be much thinner than is needed for penetrating wood composite. Using a sufficiently dense and long array of penetrating members, the upper aluminium sheet can be dispensed with, since the members become the upper heat-conducting surface. This is a variant of thermal bridging using flaps, as described for plasterboard.

Any weakening of the foam layer caused by penetration is easily compensated by laminating the foam to a tough backing layer, for example, non-woven fabric, before placing the foam layer on the penetrating pressed sheet.

The result is a uniform array of seamless rectangular bridges across the plastic foam underlay.

### Tufted carpet and carpet tiles

Over 70% of all carpet sold in the US and Europe is tufted. It is manufactured by inserting yarn through a primary backing fabric, cementing the yarn in place and then covering the primary fabric with a secondary backing fabric. The yarn is cut to create a tufted pile. The yarn fibre may be natural (usually wool) or artificial (usually nylon, polypropylene, polyester or acrylic) or a combination of these. The backing fabrics may be woven or non-woven. A typical tufted carpet has a tuft depth of around 8mm and a total backing thickness of 3mm. Carpet tiles typically have shorter tufts: between 3 and 5mm with a 3mm backing layer of vinyl reinforced with glass fibre. The yarn may be left looped.

The thermal resistance of tufted or looped carpet may be reduced by:
(a) Using shorter tufts or loops.(b) Using a lower density of tufting.(c) Changing the composition of the yarn. For example, by adding synthetic graphite to Nylon 6-6, the thermal conductivity can be increased from 0.3 watts/m°C to 1.8 watts/m°C (d) Changing the composition of the materials of which the primary and secondary backing layers are made.(e) Changing the composition of the adhesives used.(f) Using thermal bridging in the backing layers.

Prior art describes electrically conductive carpet intended to avoid build-up of static charge. Such carpet typically uses yarn with carbon-coated fibres that will conduct a charge of several thousand volts to a backing that is made electrically conductive using a carbon-impregnated latex or by also using carbon-coated fibres. Carbon-coated fibres limit the appearance of the yarn, which may not be important in commercial applications but is unacceptable in domestic use. This arrangement will not conduct significant amounts of heat. Prior art describes electrically conductive yarn using 20-50% by weight of electrically conductive filler, attached to a backing made of resin with similar quantities of conductive filler. Large percentages of electrically conductive filler also improve thermal conductivity but require significantly more added conductive material than an efficient thermal bridge, Prior art also describes attaching a very thin metal foil layer to the underside of the backing so that the foil grounds any static voltage in the yarn. This arrangement on its own does not increase the transfer of heat through the backing.

### Folded Thread Loops

In an embodiment of the present invention, the backing is thermally bridged by an adaptation of the standard manufacturing process:(a) incorporating heat-conducting threads into the primary backing layer: this becomes the heat-dispersing layer; (b) incorporating heat-conducting threads into the secondary backing layer: this becomes the heat-collecting layer; (c) weaving or pulling loops of heat-conducting thread out of the lower side of the primary backing layer.

If the heat-conducting loops are loose in the primary backing layer then they will be pushed out when tufts are pushed through the backing. When latex solution is sprayed on to the primary backing layer to anchor the tufts, these loops project through the latex. When the secondary backing layer is added, the loops are bent over. The loops are the thermal shunt.

This method is a variation of the thermal bridge already described that is based on bending an L-shaped strip in a moulded cladding.

### Conductive granules

In another embodiment of the present invention, the backing is thermally bridged by changing step (c) in the process outlined above. This step becomes: (c) incorporating heat-conducting spherical granules into the cement that joins the primary and secondary backing layers.

The granules have a diameter equal to the gap between primary and secondary backing layers. The diameter is greater than the spacing between threads in the backing layers, so that the granules are trapped between these layers. As a result of cementing under compression, the granules migrate to the voids between tufts and provide a thermal shunt that connects the heat-dispersing layer with the heat-collecting layer. In the case of standard 3mm backing, the granule diameter is around 1.5mm.

This method is a variation of the thermal bridge already described using heat-conducting shapes with a cross-section equal to the width of the bridged cladding layer.

The heat-conducting threads can be high-purity aluminium wire and the heat-conducting granules can be smooth spheres of high-purity aluminium. The aluminium wire can be anodized to improve radiant heat transfer. The heat-conducting threads can also be polymer fibre filled with conductive particles: for example, polypropylene loaded with graphite. The heat-conducting granules can be graphite.

In an embodiment, a heat-conducting foil is bonded to the top of the primary backing layer: this becomes the heat-dispersing layer. The foil is soft and is perforated by the tufting process. A heat-conducting foil is bonded to the bottom of the secondary backing layer: this becomes the heat-collecting layer. In an embodiment, these foils are high-purity aluminium.

### Penetrating pressed sheet

Penetrating pressed sheet is laminated to the secondary backing layer so that the penetrating members penetrate the secondary backing layer. Liquid latex is applied to the secondary backing layer so that the penetrating members project through the latex. The primary backing layer incorporates aluminium threads and so is heat-conducting. Tufts are inserted in the primary backing layer and this tufted layer is pressed down on the latex. The penetrating members engage with the aluminium threads in the primary backing layer. The latex is cured. The resulting layers comprise, in sequence: tufted yarn, heat-conducting primary backing layer, cured latex bridged by penetrating members, secondary backing layer, base of penetrating pressed sheet.

### BRIEF DESCRIPTION OF DRAWINGS

All figures are schematic and not to scale.

All figures illustrate embodiments of thermal bridges in cladding.
FIG 1a: cut-away plan view: panel with thermal bridge using honeycomb aluminium as a thermal shunt.
FIG 1b: cross-section of panel with thermal bridge using honeycomb.
FIG 2a: plan view: top of panel with thermal bridge using rectangular aluminium spirals.
FIG 2b: cross-section of panel with thermal bridge using rectangular aluminium spirals.
FIG 3a: plan view: panel with thermal bridge using rectangular corrugated aluminium mesh.
FIG 3b: cross-section of panel with thermal bridge using rectangular corrugated aluminium mesh.
FIG 4a: plan view: array of L-shaped aluminium strips.
FIG 4b: cross-section of array of L-shaped strips before mouldable filler is added.
FIG 4c: cross-section: L-shaped strips embedded in a moulded panel and bent into a rectangular reverse C shape.
FIG. 4d: cross-section: L-shaped strips embedded in a moulded panel and bent into a rectangular S shape.
FIG 5a: plan view: section of aluminium sheet with pattern of slits for flaps.
FIG 5b: perspective view: individual raised flap.
FIG 5c: plan view: section of aluminium sheet with pattern of slits for loops.
FIG 5d: perspective view: individual raised rectangular loop.
FIG 6a: cross-section: wrapped separate sections of cladding panel.
FIG 6b: cross-section: wrapped sections of panel joined together.
FIG 6c: cross-section: wrapped sections of panel joined together with a ceramic shunt.
FIG 7a: perspective view: single fibreboard cuboid wrapped in rectangular aluminium spiral.
FIG 7b: cross-section: cuboids embedded in pre-press mat.
FIG 7c: cross-section: cuboids embedded in panel.
FIG 8a: cross-section: array of circular aluminium spirals filled with pre-press mat.
FIG 8b: cross-section: array of spirals deformed into ovoid spirals in panel.
FIG 8c: perspective view: circular spirals in vertical arrangement for three-ply panel.
FIG 8d: cross-section: curved aluminium mesh trough filled with wood strands.
FIG 8e: cross-section: curved aluminium mesh trough folded to form cylinder.
FIG 9a: plan view: single cross-shaped cut in aluminium sheet.
FIG 9b: perspective view: teeth raised from single cross-shaped cut.
FIG 9c: plan view: single H-shaped cut in aluminium sheet.
FIG 9d: perspective view: straight edges raised from H-shaped cut.
FIG 9e: plan view: single H-shaped cut with slanted cross cut in aluminium sheet.
FIG 9f: perspective view: guillotine edges raised from slanted H-shaped cut.
FIG 9g: plan view: single H-shaped cut with zigzag cross cut in aluminium sheet.
FIG 9h: perspective view: saw-tooth edges raised from H-shaped cut with zigzag cross cut.
FIG 9i: plan view: single V-headed cut at the end of parallel cuts in aluminium sheet.
FIG 9j: perspective view: aluminium sheet with single raised V-headed member.
FIG 10a: cross-section: single raised V-headed member penetrating hot-pressed panel and resilient felt layer.
FIG 10b: cross-section: single raised V-headed member folded and laminated to aluminium sheet.
FIG 11a: plan view: staggered pattern of H-shaped cuts on aluminium sheet.
FIG 11b: cross-section: penetrating pressed aluminium sheet on pre-press mat.
FIG 11c: cross-section: penetrating pressed aluminium sheet embedded in panel.
FIG 12a: cross-section: engineered wood floorboard without thermal bridge.
FIG 12b: cross-section: engineered wood floorboard with lower layers thermally bridged by rectangular aluminium spirals.
FIG 12c: cross-section: engineered wood floorboard with lower layers thermally bridged by a ceramic thermal shunt and aluminium sheets.
FIG 12d: cross-section: engineered wood floorboard with sections thermally bridged by wrapped aluminium sheet.
FIG 13a: cross-section: aluminium thread loops projecting through carpet primary backing layer.
FIG 13b: cross-section: aluminium thread loops embedded in carpet backing cement and folded against the secondary backing layer.
FIG 13c: cross-section: aluminium granules embedded in carpet backing cement.

### DETAILED DESCRIPTION OF INVENTION

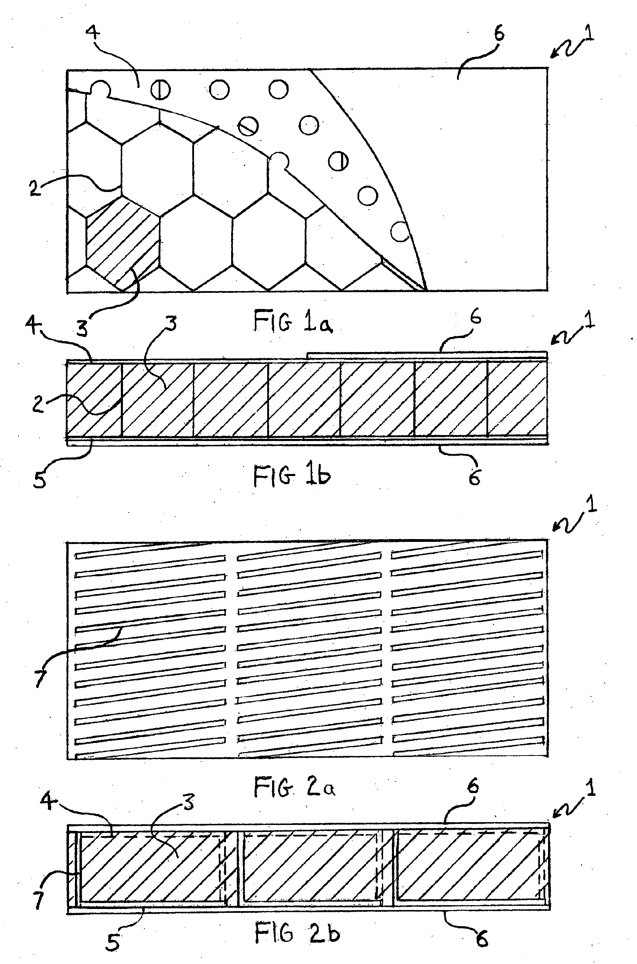

**FIG 1a****:** cut-away plan view: panel (1) with thermal bridge using honeycomb (2).
This figure is cut away to show the separate layers of a panel of moulded cladding (1) that, for example, can be plasterboard or fibreboard. The panel (1) has an embedded thermal shunt that is an aluminium honeycomb (2). The cells of the honeycomb (2) are filled with the material or filler (3) of the cladding (1). (Only one cell is shown filled in the plan view). The filler (3) can be plaster or can be wood particles combined with resin or can be another mouldable constructional material such as, for example, cement. The honeycomb (2) is bonded by adhesive to a first heat collecting/dispersing layer (4) that is aluminium sheet laminated to the lower side of the panel (1) (not shown in the plan view) and to a second heat collecting/dispersing layer (5) that is aluminium sheet laminated to the upper side of the panel (1). In the case of plasterboard, the heat-conducting layers (4 and 5) allow drying of the plaster, for example, by being perforated, as shown in the plan view. The outer layers of the plasterboard are paper (6). The honeycomb (2) and the laminated sheets (4, 5) constitute a uniform array of rectangular thermal bridges across the panel (1).
**FIG 1b****:** cross-section of panel (1) with thermal bridge using honeycomb (2).

**FIG 2a**: plan view: top of panel (1) with thermal bridge using rectangular spirals (7).

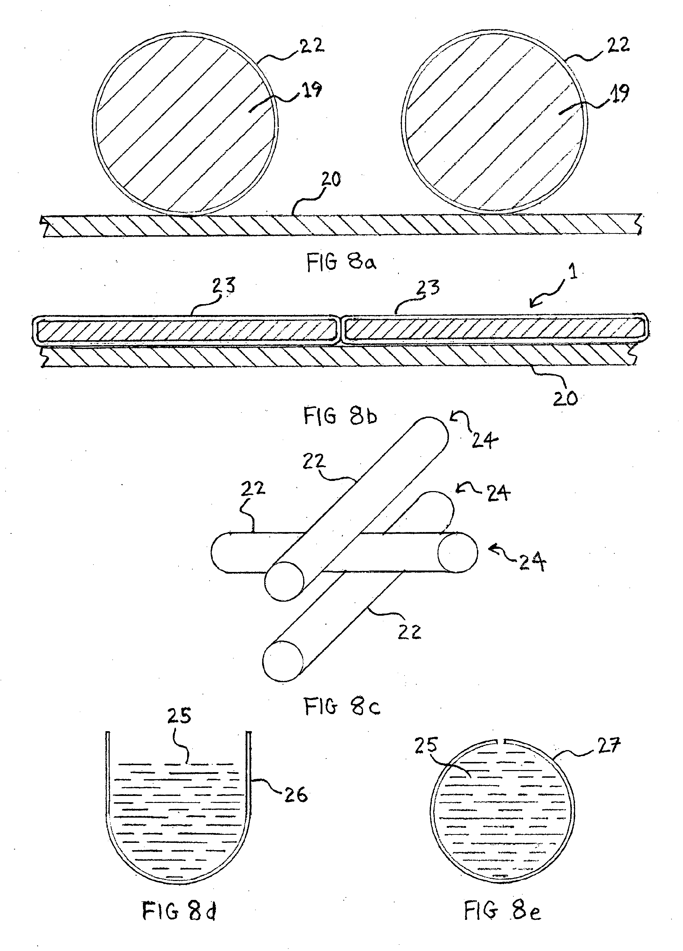

A panel of moulded cladding (1) has an embedded thermal bridge that is a row of rectangular spirals (7) made of aluminium wire or strip. The spaces between the turns of the spirals (7) are filled with the filler (3) of the cladding (1) (the filler is not shown in the plan view). The upper edges of the spirals (7) serve as a first heat collecting/dispersing layer (4) and the lower edges of the spirals serve as a second heat collecting/dispersing layer (5). The spirals (7) constitute a uniform array of seamless rectangular thermal bridges across the panel (1). Using almost the same figure, spirals (7) can be substituted by rolls (or cylinders) of aluminium mesh (not shown), also with a rectangular cross-section. Cylinders of rolled mesh are referenced in FIGs 8d and 8e.
**FIG 2b****:** cross-section of panel (1) with thermal bridge using rectangular spirals (7).
An almost identical figure would show the spirals (7) substituted by rolls (or cylinders) of aluminium mesh (not shown), also with a rectangular cross-section.
In this instance, the panel (1) is plasterboard and has outer layers of paper (6)

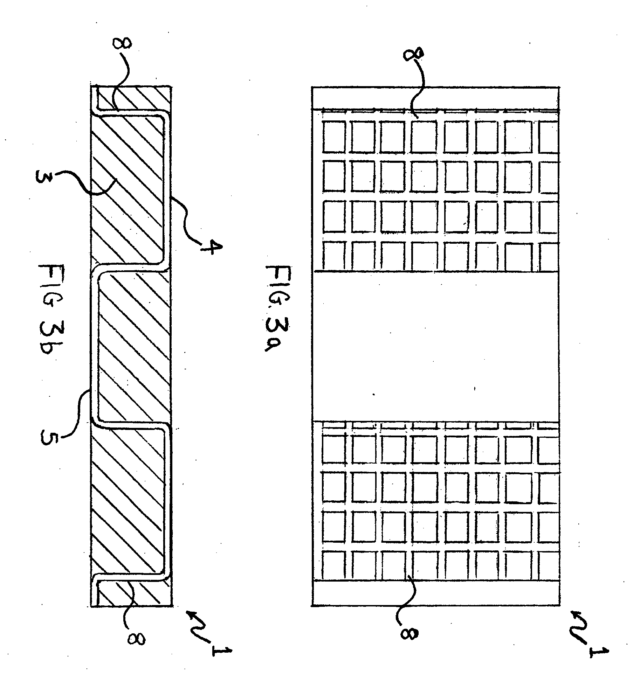

**FIG 3a****:** plan view: panel (1) with thermal bridge using rectangular corrugated mesh (8).
An aluminium mesh (8) has corrugations with a rectangular profile. The mesh (8) can be substituted by an expanded sheet or by a perforated sheet. The voids in the corrugation are filled with the filler (3) of the cladding (1) (the filler is not shown in the plan view). The upper surface of the mesh (8) serves as a first heat collecting/dispersing layer (4) and the lower surface of the mesh (8) serves as a second heat collecting/dispersing layer (5). The mesh (8) constitutes a uniform array of seamless rectangular thermal bridges across the panel (1).
**FIG 3b****:** cross-section of panel (1) with embedded rectangular corrugated mesh (8).

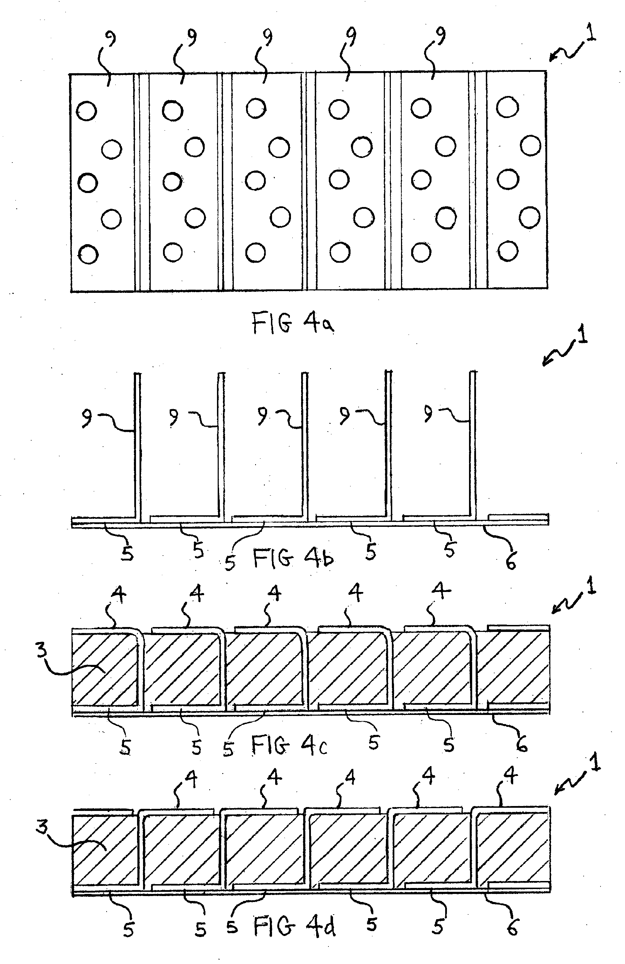

**FIG 4a****:** plan view: array of L-shaped strips (9).
L-shaped strips (9) of aluminium sheet are bonded to a lower layer (6): in the example of plasterboard, this layer (6) can be paper. The strips are shown with perforations to assist cohesion with the mouldable filler(3, not shown)
**FIG 4b****:** cross-section of array of L-shaped strips (9) before mouldable filler (3) is added.
The lower portions of the L-shaped strips (9) are the second heat collecting/dispersing layer (5).
**FIG 4c****:** cross-section: L-shaped strips (9) embedded in a moulded panel (1) and bent into a rectangular reverse C shape.
The upper portions of the strips (9) are laminated against the top surface of the panel (1). The upper portions of the L-shaped strips (9) are a first heat collecting/dispersing layer (4). The lower portions of the L-shaped strips (9) are a second heat collecting/dispersing layer (5). The folded C-shaped strips form a uniform array of seamless rectangular thermal bridges across the panel (1)
**FIG 4d****:** cross-section: L-shaped strips (9) embedded in a moulded panel (1) and bent into a rectangular S shape.
The upper portions of the strips (9) are laminated against the top surface of the panel (1). The upper portions of the L-shaped strips (9) are a first heat collecting/dispersing layer (4). The lower portions of the L-shaped strips (9) are a second heat collecting/dispersing layer (5). The folded S-shaped strips form a uniform array of seamless rectangular thermal bridges across the panel (1)

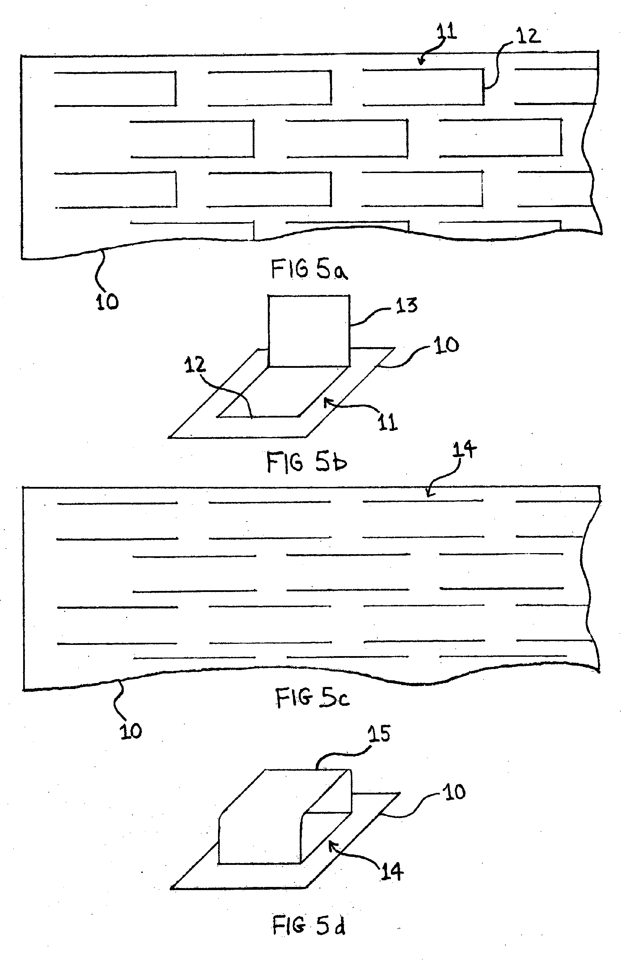

**FIG 5a****:** plan view: section of aluminium sheet (10) with pattern (11) of slits for flaps (13).
An aluminium sheet (10) has a uniform array of pairs of slits (11). Each pair of slits (11) has a linking cut (12) across one end.
**FIG 5b****:** perspective view: individual raised flap (13).
A flap (13) between each pair of slits (11) in an aluminium sheet (10) is- lifted to a vertical position. A uniform array (not shown) of such flaps (13) can be used in the same way as the L-shaped strips (9) (see FIGs 4a to 4d) to form a uniform array of seamless rectangular thermal bridges across a panel (1).
**FIG 5c****:** plan view: section of aluminium sheet (10) with pattern (14) of slits for loops (15).
An aluminium sheet (10) has a uniform array of pairs of slits (14).
**FIG 5d****:** perspective view: individual raised rectangular loop (15).
The sheet between each pair of slits (14) is pushed up to form a rectangular loop (15). An array (not shown) of such loops (15) can be embedded in a moulded panel (1) (not shown) to form a uniform array of seamless rectangular thermal bridges.

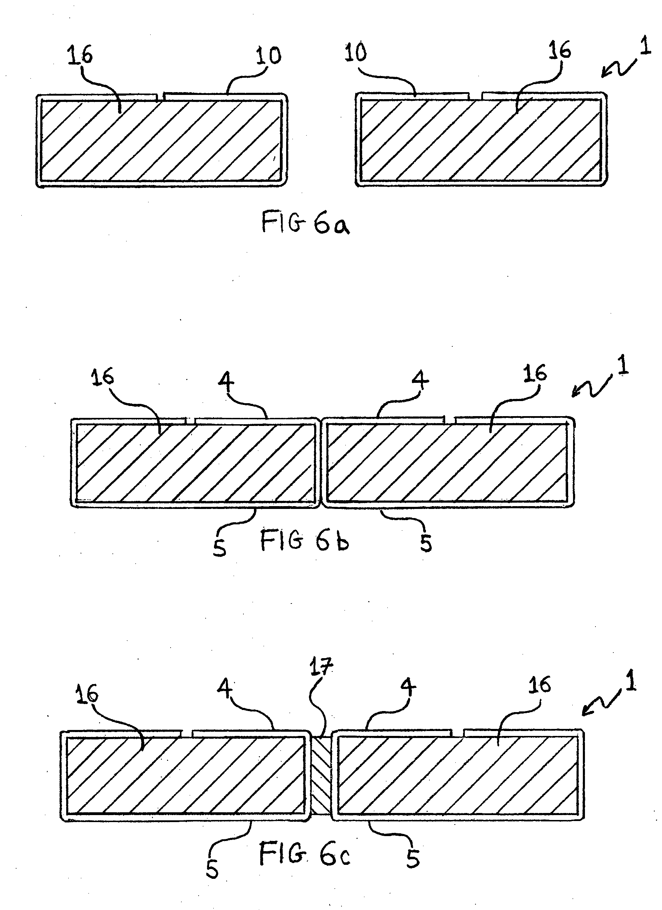

**FIG 6a****:** cross-section: wrapped separate sections (16) of cladding panel (1).
Cladding panel (1) is divided into two sections (16). A aluminium sheet (10) is wrapped fully round each section (16) and bonded to each section (10)
**FIG 6b****:** cross-section: wrapped sections (16) of panel (1) joined together.
Two sections (16) of panel (1) are bonded together. The wrapped aluminium sheet (10) constitutes seamless rectangular thermal bridges across the panel (1)
**FIG 6c****:** cross-section: wrapped sections (16) of panel (1) joined together with a ceramic shunt (17).
A moulded porcelain thermal shunt (17) is bonded between the sections (16).
The number and width of sections (16), the thickness of the wrapping layer (10) and the material and geometry of the shunt (17) can all be varied.

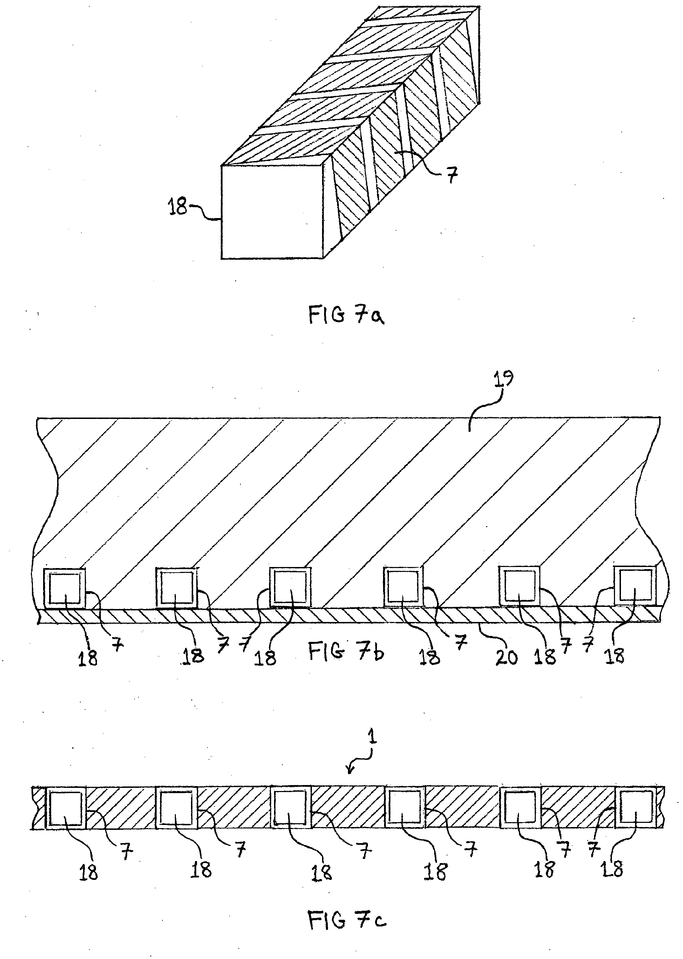

**FIG 7a****:** perspective view: single fibreboard cuboid (18) wrapped in rectangular aluminium spiral (7) Cuboids (18) -rods of fibreboard with a rectangular cross-section - are formed in a shaped hot press (not shown). The cuboids are wrapped in a rectangular aluminium spiral (7).
**FIG 7b****:** cross-section: cuboids (18) embedded in pre-press mat (19).
Fibreboard cuboids (18) wrapped in aluminium spiral (7) are arranged in a uniform array on a forming platform (20) with gaps (21) between the cuboids (18).
**FIG 7c****:** cross-section: cuboids (18) embedded in panel (1).
During pressing, the pre-press mat (19) flows into the gaps (21) between the cuboids (18).
The result is a uniform array of seamless rectangular thermal bridges across the panel.
**FIG 8a****:** cross-section: array of circular spirals (22) filled with pre-press mat (19).
An array of aluminium spirals (22) (two are shown) of circular cross-section is filled with the pre-press mat (19).
**FIG 8b****:** cross-section: array of spirals deformed into ovoid spirals (23) in panel (1).
During hot-pressing, the pre-press mat (19) is compressed by a ratio of 5-10 x. Adjacent circular spirals (22), filled with fibres, are deformed by pressure into flat ovoid spirals (23) and fixed by curing of a binding agent. The ovoid spirals (23) are forced into contact. A series of parallel flat ovoid spirals (23) constitute a uniform array of seamless, rectangular thermal bridges across the panel (1).
**FIG 8c****:** perspective view: circular spirals (22) in vertical arrangement for three-ply panel (1).
A pre-press mat (19) for an OSB panel comprises three layers (24) of circular spirals (22) (single spirals shown) each filled with wood strands (24, not shown) that are generally oriented along the axes of each spiral (22). Spirals (22) in each layer (24) are arranged in a uniform planar array (not shown) at right angles to spirals (22) in adjacent layers (24).
During hot-pressing, the spirals (22) deform into ovoid spirals (23, not shown), are pressed forcefully against adjacent spirals (22), are fixed in place by curing of a binding agent and form a uniform array of effectively seamless, near-rectangular thermal bridges across the panel (1).
**FIG 8d****:** cross-section: curved aluminium mesh trough (26) filled with wood strands (25).
A curved trough (26) is made by folding perforated aluminium sheet, for example, flattened expanded aluminium mesh. The trough (26) is filled with wood strands (25), with the strands (25) generally aligned with the longer dimension of the trough (26).
**FIG 8e****:** cross-section: curved aluminium mesh trough (26) folded to form cylinder (27).
The curved trough (26) shown in FIG 8d is folded over to form a perforated aluminium cylinder (27). A uniform array of such pre-filled cylinders (27) is placed on the forming platform (not shown). During hot pressing, the cylinders (27) deform into cylinders with a flat ovoid cross-section (not shown). The flattened cylinders (not shown) are fixed in place by curing of a binding agent and form a uniform array of effectively seamless, rectangular thermal bridges across the layer (not shown). Pre-filled cylinders (27) can be used to thermally bridge three-layer OSB using the arrangement described in FIG 8c.

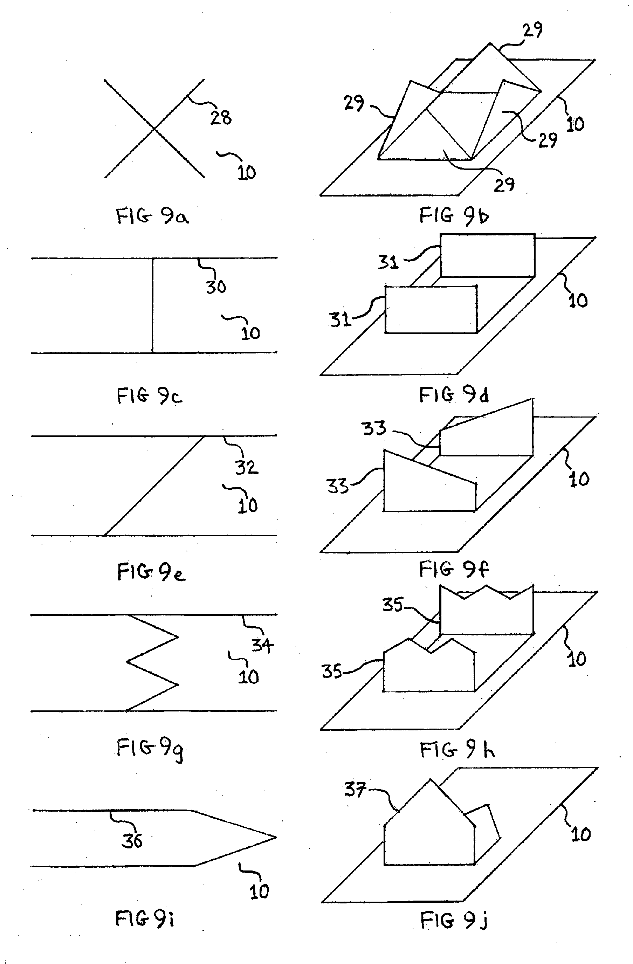

**FIG 9a****:** plan view: single cross-shaped cut (28) in sheet (10).
An aluminium sheet (10) is cut with a staggered pattern (not shown) of cross-shaped cuts (28).
**FIG 9b****:** perspective view: teeth (29) raised from single cross-shaped cut (28).
The cross-shaped cuts (28) in the aluminium sheet (10) are pushed up to form an array (not shown) comprising four teeth (29) from each cross-shaped cut (28). The sheet (10) and the array of teeth (29) comprise a penetrating pressed sheet (42, not shown).
**FIG 9c****:** plan view: single H-shaped cut (30) in sheet (10).
An aluminium sheet (10) is cut with a staggered pattern (not shown) of H-shaped cuts (30).
**FIG 9d****:** perspective view: straight edges (31) raised from H-shaped cut (30).
The H-shaped cuts (30) in the aluminium sheet (10) are pushed up to form an array (not shown) comprising two edges (31) from each H-shaped cut (30). The sheet (10) and the array of edges (31) comprise a penetrating pressed sheet (42, not shown).
**FIG 9e****:** plan view: single H-shaped cut with slanted cross cut (32) in sheet (10)
An aluminium sheet (10) is cut with a staggered pattern (not shown) of H-shaped cuts with slanted cross cut (32).
**FIG 9f****:** perspective view: guillotine edges (33) raised from slanted H-shaped cut (32).

The H-shaped cuts (32) in the aluminium sheet (10) are pushed up to form an array (not shown) comprising two guillotine edges (33) from each H-shaped cut (32). The sheet (10) and the array of edges (33) comprise a penetrating pressed sheet (42, not shown).
**FIG 9g****:** plan view: single H-shaped cut with zigzag cross cut (34) in sheet (10).
An aluminium sheet (10) is cut with a staggered pattern (not shown) of H-shaped cuts with zigzag cross cut (34)
**FIG 9h****:** perspective view: saw-tooth edges (35) raised from H-shaped cut with zigzag cross cut (34). The H-shaped cuts (34) in the aluminium sheet (10) are pushed up to form an array (not shown) comprising two saw-toothed edges (35) from each H-shaped cut (34). The sheet (10) and the array of edges (35) comprise a penetrating pressed sheet (42, not shown).
**FIG 9i****:** plan view: single V-headed cut at the end of parallel cuts (36) in sheet (10).
An aluminium sheet (10) is cut with a staggered pattern (not shown) of V-headed cuts at the end of parallel cuts (36).
**FIG 9j****:** perspective view: aluminium sheet (10) with single raised V-headed member (37).
The V-headed cuts (36) in the aluminium sheet (10) are pushed up to form an array (not shown) comprising a V-headed member (37) from each V-shaped cut (36). The sheet (10) and the array of V-headed members (36) comprise a penetrating pressed sheet (42, not shown).

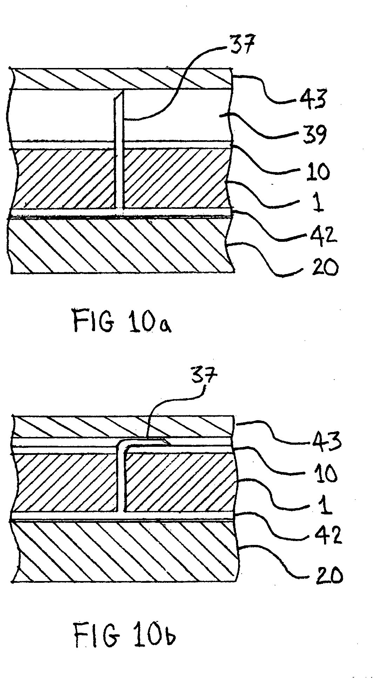

**FIG 10a****:** cross-section: single raised V-headed member (37) penetrating hot-pressed panel (1) and resilient felt layer (39).
Arranged on a forming platform (20) is a penetrating pressed sheet (42) with a uniform array of V-headed members pointing upwards (37, one only shown). Above the pressed sheet (42) are layers in the following sequence: a compressed panel (1), a plain aluminium sheet (10), a layer of resilient wool or mineral felt (39) and a plate of hardened steel (43). The cross-section shows the result of hot pressing. A mat (19, not shown) has been compressed to form the panel (1). The V-headed member (37) has penetrated the panel, including the aluminium sheet (10) and also the felt (39).
**FIG 10b****:** cross-section: single raised V-headed member (37) folded and laminated to aluminium sheet (10).
The press has been released, the felt layer (39, not shown) has been peeled off the projecting V-headed member (37). The remaining layers have been compressed again so that the V-headed member (37) has been folded over and laminated against the aluminium sheet. (10)

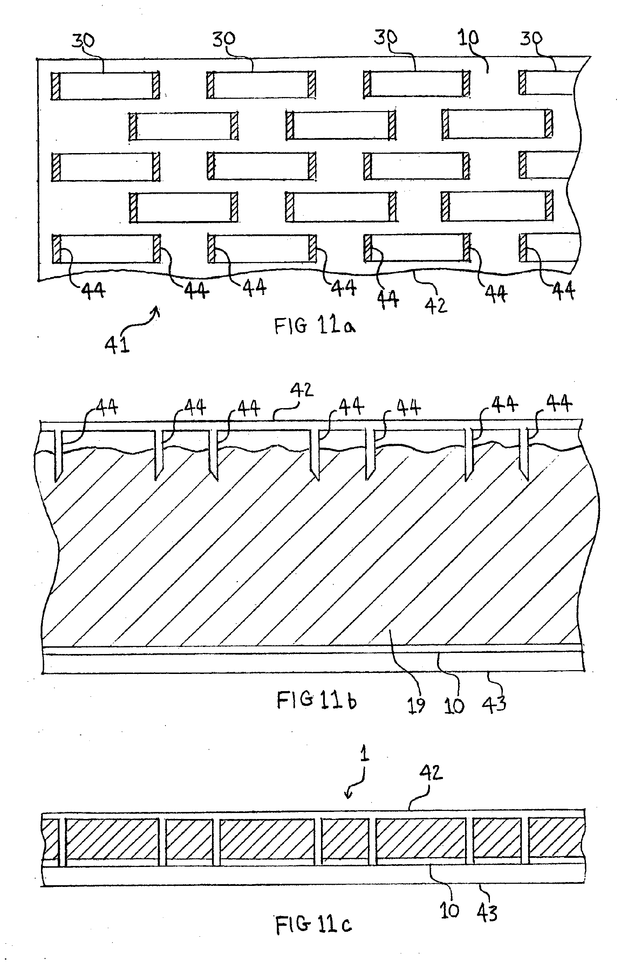

**FIG 11a****:** plan view: staggered pattern (41) of H-shaped cuts (30) on aluminium sheet (10).
The pattern of cuts (41) is staggered so that the penetrating pressed sheet (42) is less likely to weaken the panel (1)
**FIG 11b****:** cross-section: penetrating pressed sheet (42) on pre-press mat (19).
A pre-pressed mat (19) is formed upon an aluminium sheet (10) that is placed on a steel plate (43), preferably made of hardened, wear-resistant steel. A penetrating pressed sheet (42) bearing an array of penetrating members (44) is placed on the top of a pre-press mat (19) with the members (44) facing downwards.

**FIG 11c****:** cross-section: penetrating pressed sheet (42) embedded in panel (1).
During hot pressing, the penetrating members (44) are driven through the mat (19), come into forceful contact with the lower aluminium sheet (10) and are fixed in pace by curing of a binding agent. The steel plate (43) allows the penetrating members (44) to fully penetrate the aluminium sheet (10) without damage to the press (not shown). As a result a uniform array of effectively seamless, rectangular thermal bridges is formed across the panel (1).

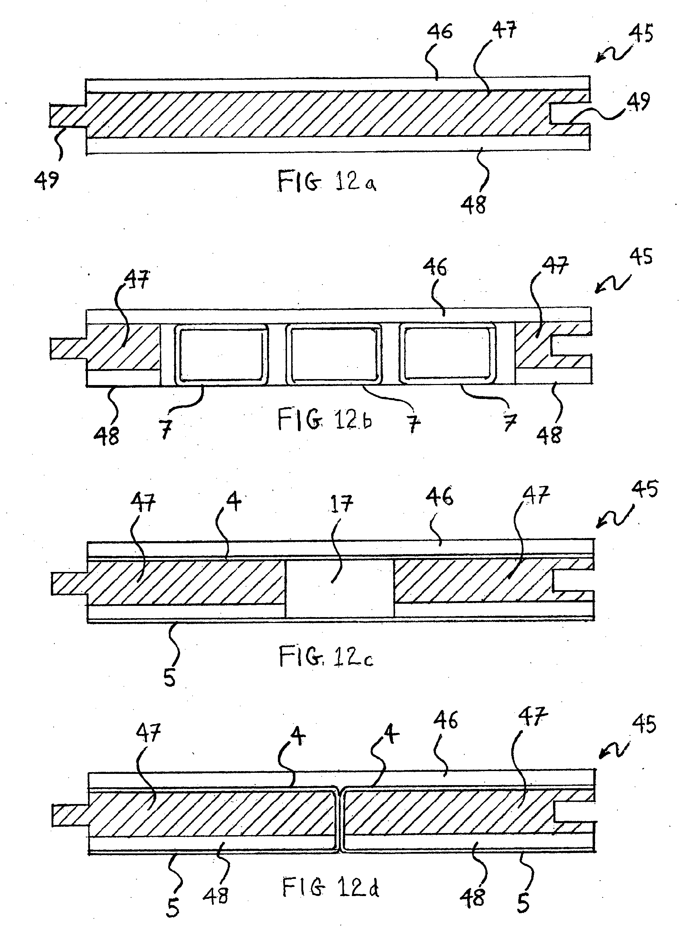

**FIG 12a****:** cross-section: engineered wood floorboard (45) without thermal bridge.
An engineered floorboard (45) has an upper hardwood layer (46), a central core layer (47) and a lower stabilizing layer (48). The edges (49) of the floorboard (45) are shaped so that adjacent boards (45) interlock. The simplest interlock -tongue and groove- is shown. More complex interlock geometries can also be used.
**FIG 12b****:** cross-section: engineered wood floorboard (45) with lower layers thermally bridged by rectangular spirals (7).
An engineered wood floorboard (45) has a section of the core layer (47) and a section of the stabilizing layer (48) replaced by moulded wood composite (50) in which there are embedded thermal bridges: in this case an array of rectangular spirals (7) of heat-conducting wire or strip, as described in FIGs 2a and 2b. Other embedded thermal bridges described here can be used. The moulded wood composite (50) can also replace all the core layer (47) including tongue and groove. (this variant not shown).
**FIG 12c****:** cross-section: engineered wood floorboard (45) with lower layers thermally bridged by a ceramic thermal shunt (17) and aluminium sheets (10).
An engineered wood floorboard (45) has aluminium sheet (10) laminated between the upper hardwood layer (46) and the central core layer (47) and has aluminium sheet (10) laminated to the base of the stabilizing layer (48). The same sheet (10) is bonded to a ceramic thermal shunt (17).
**FIG 12d****:** cross-section: engineered wood floorboard (45) with sections thermally bridged by wrapped sheet.
An engineered wood floorboard (45) is the same as shown in FIG 12c, except that a continuous aluminium sheet (10) is wrapped around sections of the core layer (47) and stabilizing layer (48). An additional thermal shunt (17) is omitted but can be included.

The thermal bridging methods applicable to engineered wood floorboards (45) are also applicable to laminate flooring (not shown). In laminate flooring the upper hardwood layer (46) shown in FIGs 12a to 12d inclusive is replaced by a combination of protective and decorative upper layers.

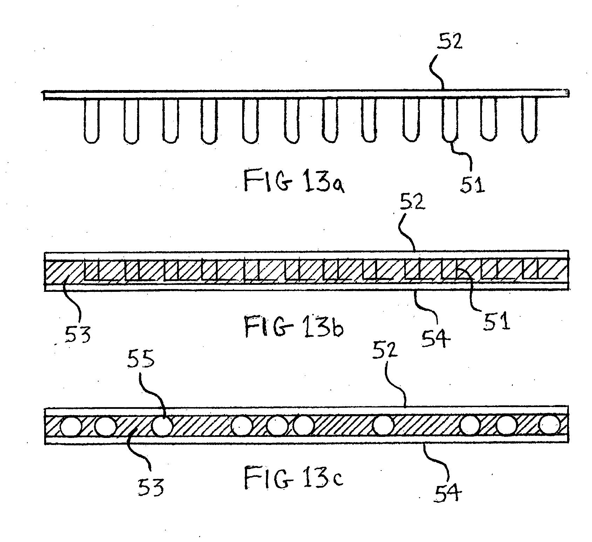

**FIG 13a****:** cross-section: aluminium thread loops (51) projecting through carpet primary backing layer (52).
Primary backing (52) for tufted or loop carpet comprises a net of fibres (not shown). Aluminium thread is woven through the primary backing layer (52) and protrudes in an array of loops (51).
**FIG 13b****:** cross-section: aluminium thread loops (51) embedded in carpet backing cement (53) and folded against the secondary backing layer (54).

Laminated to the primary backing layer (52) is a layer of backing cement (53), for example, latex. The cement (53) anchors yarn (not shown), that has been pushed through the primary backing layer (52) and bonds to the secondary backing layer (54), which also comprises a net of fibres, including aluminium thread (not shown). The loops (51) are folded against the secondary backing layer (54). The loops (51) constitute thermal shunts, the primary backing (52) is the heat-dispersing layer, and the secondary backing (54) is the heat-collecting layer. In combination, the primary backing (52), the loops (51) and the secondary backing (54) constitute a distributed array of approximately rectangular thermal bridges.
**FIG 13c****:** cross-section: aluminium granules (55) embedded in carpet backing cement (53).
The primary backing layer (52) and the secondary backing layer (54) both include aluminium thread (not shown). Heat-conducting spherical granules (55) are dispersed uniformly in the cement (53). The diameter of the granules (55) is slightly less than the overall width of the backing so that the granules (55) dispersed in the cement (53) provide a direct thermal path through the backing cement (53) between the two backing layers (52, 54), creating a distributed array of effectively rectangular thermal bridges across the carpet backing.

### SCOPE OF INVENTION

A number of embodiments of thermal bridging are described here, with reference to particular forms of interior cladding and in general preferring aluminum as material for thermal bridges. It is envisaged that various details of the invention may be modified without departing from the scope of the invention as defined by the claims. For example, other variants of interior cladding and other materials for thermal bridging can be considered to be within the scope of the invention. The foregoing descriptions of alternative embodiments of the invention are for illustration and not for the purpose of limitation.

## Claims

1. A cladding for the interior surface of a living space, said cladding being used for radiant heat transfer and comprising:
a. a primary cladding layer having a thermal conductivity less than 2 watts/m°K;
b. a thermal bridge having a thermal conductivity at least ten times greater than the thermal conductivity of said primary layer and comprising a heat-collecting layer a heat-dispersing layer and a thermal shunt;
c. said heat-collecting layer being substantially parallel to said primary layer and on the heat-absorbing side of said primary layer;
d. said heat-dispersing layer being substantially parallel to said primary layer and on the heat-emitting side of said primary layer;
e. said thermal shunt penetrating said primary layer substantially at a right angle to the plane of said primary layer and thermally connected to said heat-collecting layer and to said heat-dispersing layer;
f. said thermal bridge comprising an array of elements substantially uniformly distributed and embedded in said primary layer, each of said elements being constructed of continuous material;
g. said primary cladding layer having a mouldable phase in manufacture and said thermal bridge being embedded in said primary cladding layer during said mouldable phase;
**characterised in that**:
h. said elements are arranged in an open structure, whereby said primary cladding layer in said mouldable phase can flow between said elements and form a uniform coherent mass that protects the structural integrity of said cladding;
i. said thermal bridge having a height equal to the thickness of said cladding;
j. said elements being selected from one of the following alternatives:
i) spirals of substantially rectangular cross-section;
ii) rolls of mesh of substantially rectangular cross-section;
iii) mesh formed into corrugations of substantially rectangular profile;
iv) loops formed from heat-conductive sheet slit into a uniform array of pairs of slits, said sheet between each of said pairs of slits being pressed at right angles to the plane of said sheet so that this portion of said sheet is drawn into an open rectangular loop, forming a planar array of rectangular loops seamlessly connected to a planar base;
v) flaps formed from heat-conductive sheet slit into a uniform array of pairs of slits, each of said pairs of slits being joined at one end by a cut at right angles to said slits, said sheet between each of said pairs of slits being pressed at right angles to the plane of said sheet so that this portion of said sheet becomes a flap, so forming a planar array of flaps at right angles to and seamlessly connected to a planar base, the height of said flaps exceeding the thickness of said primary cladding whereby said flaps can be bent over and flattened against the face of said primary cladding opposite said planar base;
vi) L-shaped strips of heat-conductive mesh or of heat-conductive sheet or of perforated heat-conductive sheet bonded in a uniform array to a planar base layer, the upright portions of said strips exceeding the thickness of said primary cladding whereby said strips can be bent over and flattened against the face of said primary cladding opposite said planar base;
vii) pre-filled elements of substantially cuboid shape wrapped round their circumference with heat-conductive sheet.

2. A cladding for the interior surface of a living space, said cladding being used for radiant heat transfer and comprising:
a. a primary cladding layer having a thermal conductivity less than 2 watts/m°K;
b. a thermal bridge having a thermal conductivity at least ten times greater than the thermal conductivity of said primary layer and comprising a heat-collecting layer, a heat-dispersing layer and a thermal shunt;
c. said heat-collecting layer being substantially parallel to said primary layer and on the heat-absorbing side of said primary layer;
d. said heat-dispersing layer being substantially parallel to said primary layer and on the heat-emitting side of said primary layer;
e. said thermal shunt penetrating said primary layer substantially at a right angle to the plane of said primary layer and thermally connected to said heat-collecting layer and to said heat-dispersing layer;
**characterised in that**:
f. said thermal bridge comprises at least one first continuous heat-conductive sheet slit and pressed to form a uniform array of penetrating members substantially at a right angle to said first heat-conductive sheet and at least one second continuous planar heat-conductive sheet into which said members are pressed and bonded, whereby the portion of said penetrating members that is embedded in said primary cladding layer constitutes said thermal shunt and said first and second sheets constitute said heat-collecting and heat-dispersing layers;
g. the height of said penetrating members being at least the thickness of said primary cladding layer, and the height of said members exceeding the thickness of said primary cladding layer being bent over and flattened against the surface of said second heat conductive sheet into which said members are pressed and bonded.

3. A cladding for the interior surface of a living space, said cladding being used for radiant heat transfer and comprising:
a. a primary cladding layer having a thermal conductivity less than 2 watts/m°K;
b. a thermal bridge having a thermal conductivity at least ten times greater than the thermal conductivity of said primary layer and comprising a heat-collecting layer, a heat-dispersing layer and a thermal shunt;
c. said heat-collecting layer being substantially parallel to said primary layer and on the heat-absorbing side of said primary layer;
d. said heat-dispersing layer being substantially parallel to said primary layer and on the heat-emitting side of said primary layer;
e. said thermal shunt penetrating said primary layer substantially at a right angle to the plane of said primary layer and thermally connected to said heat-collecting layer and to said heat-dispersing layer;
**characterised in that**:
f. said thermal shunt is at least one panel having a honeycomb structure;
g. the thickness of said honeycomb panel being equal to the thickness of said primary cladding layer;
h. said primary cladding layer having a mouldable phase in manufacture and said honeycomb panel being embedded in said primary cladding layer by moulding.

4. A cladding for the interior surface of a living space, said cladding being used for radiant heat transfer and comprising:
a. a primary cladding layer having a thermal conductivity less than 2 watts/m°K;
b. a thermal bridge having a thermal conductivity at least ten times greater than the thermal conductivity of said primary layer and comprising a heat-collecting layer, a heat-dispersing layer and a thermal shunt;
c. said heat-collecting layer being substantially parallel to said primary layer and on the heat-absorbing side of said primary layer;
d. said heat-dispersing layer being substantially parallel to said primary layer and on the heat-emitting side of said primary layer;
e. said thermal shunt penetrating said primary layer substantially at a right angle to the plane of said primary layer and thermally connected to said heat-collecting layer and to said heat-dispersing layer;
**characterised in that** said cladding further comprises:
f. said primary cladding layer being a layer of backing cement for a carpet;
g. said heat-dispersing layer comprising heat-conducting threads incorporated into a primary backing fabric for said carpet;
h. said heat-collecting layer comprising heat-conducting threads incorporated into a secondary backing fabric;
i. said thermal shunt comprising loops of heat-conducting thread woven or pulled out of lower side of said primary backing fabric, projecting through said backing cement and folded against said secondary backing fabric, the loops so formed being said thermal shunt.

5. A cladding as claimed in any of claims 1 to 4 wherein the material of said thermal bridge is aluminium exceeding 85% purity and preferably exceeding 95% purity.

## Patentansprüche

1. Ein Verkleiding für die Innenfläche eines Wohnraums, wobei der besagte Verkleiding zur Strahlungswärmeübertragung verwendet wird, und umfasst:
a. eine primäre Mantelschicht mit einer Wärmeleitfähigkeit von weniger als 2 Watt / m ° K;
b. eine Wärmebrücke mit einer Wärmeleitfähigkeit, die mindestens zehnmal größer als die Wärmeleitfähigkeit der besagte Primärschicht ist und eine Wärmesammelschicht, eine Wärmeabgebendeschicht und einen thermischen Nebenschluss umfasst;
c. wobei die besagte Wärmesammelschicht im Wesentlichen parallel zu der besagt Primärschicht und angrenzend der Wärmeabsorptionsseite der besagte Primärschicht ist;
d. wobei die besagte wärmeablgebende Schicht im Wesentlichen parallel zu der besagte Primärschicht und angrenzend der wärmeabgebenden Seite der besagte Primärschicht ist;
e. wobei der thermische Shunt die Primärschicht im Wesentlichen rechtwinklig zur Ebene der besagte Primärschicht durchdringt und thermisch mit der besagte Wärmesammelschicht und mit der besagte Wärmeabgebendeschicht verbunden ist;
f. wobei die besagte Wärmebrücke eine Anordnung von Elementen umfasst, die im Wesentlichen gleichmäßig verteilt und in der besagte Primärschicht eingebettet sind, wobei jedes der Elemente aus einem kontinuierlichen Material aufgebaut ist;
g. wobei die besagte primäre Mantelschicht eine formbare Phase bei der Herstellung aufweist und die Wärmebrücke während der formbaren Phase in der besagte primären Mantelschicht eingebettet ist;
**dadurch gekennzeichnet, dass**
h. die Elemente in einer offenen Struktur angeordnet sind, wodurch die besagte primäre Mantelschicht in der formbaren Phase zwischen den Elementen fließen kann und eine einheitliche kohärente Masse bilden kann, die die strukturelle Integrität des Mantels schützt;
i. wobei die besagte Wärmebrücke eine Höhe hat, die gleich der Dicke der Ummantelung ist;
j. wobei die besagte Elemente aus einer der folgenden Alternativen ausgewählt werden:
i) Spiralen mit im wesentlichen rechteckigem Querschnitt;
ii) Maschenrollen mit im wesentlichen rechteckigem Querschnitt;
iii) Maschenblatten, die zu Wellungen von im wesentlichen rechteckigem Profil geformt sind;
iv) Schlaufen, die aus ein wärmeleitendes Blech gebildet sind, das zu einer gleichförmigen Anordnung von Schlitzpaaren geschnitten ist, wobei das besagte Blech zwischen jedem der Schlitzpaare rechtwinklig zur Ebene das besagte Blech gedrückt wird, so dass dieser Teil des Blech gezogen wird in eine rechteckige Schleife, wobei eine planare Anordnung von rechteckigen Schleifen bildet, die nahtlos mit einer planaren Basis verbunden sind;
v) Klappen, die aus ein wärmeleitendes Blech gebildet sind, das zu einer gleichförmigen Anordnung von Schlitzpaaren ausgebildet ist, wobei jedes der Schlitzpaare an einem Ende durch einen Schnitt im rechten Winkel zu den Schlitzen verbunden ist, wobei das besagte Blech zwischen den Schlitzpaaren senkrecht zu der Ebene liegt, in der das besagte Blech gedrückt wird, so dass dieser Abschnitt des besagten Blechs zu einer Klappe wird, wodurch eine ebene Anordnung von Klappen rechtwinklig zu einer ebenen Basis gebildet wird und nahtlos mit einer ebenen Basis verbunden ist, wobei die Höhe der Klappen übersteigt die die Dicke der besagte primäre Mantelschicht, wodurch die die besagte Klappen können gebogen und abgeflacht werden auf der Oberfläche der besagte primären Mantelschicht auf der Seite, die der besagte planare Basisschicht gegenüberliegt;
vi) L-förmige Streifen aus wärmeleitendem Netz oder aus wärmeleitendem Blatt oder aus perforiertem wärmeleitendem Blatt, die in einer gleichmäßigen Anordnung an eine planare Basisschicht gebunden sind, wobei die aufrechten Abschnitte der Streifen die Dicke der besagte primäre Mantelschicht übersteigen, wodurch die die besagte Streifen können gebogen und abgeflacht werden auf der Oberfläche der besagte primären Mantelchicht auf der Seite, die der besagte planare Basisschicht gegenüberliegt.
vii) vorgefüllte Elemente von im Wesentlichen quaderförmiger Form, die um ihren Umfang mit ein wärmeleitendes Blech umwickelt sind.

2. Ein Verkleiding für die Innenfläche eines Wohnraums, wobei der besagte Verkleiding zur Strahlungswärmeübertragung verwendet wird, und umfasst:
a. eine primäre Mantelschicht mit einer Wärmeleitfähigkeit von weniger als 2 Watt / m ° K;
b. eine Wärmebrücke mit einer Wärmeleitfähigkeit, die mindestens zehnmal größer als die Wärmeleitfähigkeit der besagte Primärschicht ist und eine Wärmesammelschicht, eine Wärmeabgebendeschicht und einen thermischen Nebenschluss umfasst;
c. wobei die besagte Wärmesammelschicht im Wesentlichen parallel zu der besagt Primärschicht und angrenzend der Wärmeabsorptionsseite der besagte Primärschicht ist;
d. wobei die besagte wärmeablgebende Schicht im Wesentlichen parallel zu der besagte Primärschicht und angrenzend der wärmeabgebenden Seite der besagte Primärschicht ist;
e. wobei der thermische Shunt die besagte Primärschicht im Wesentlichen rechtwinklig zur Ebene der besagte Primärschicht durchdringt und thermisch mit der besagte Wärmesammelschicht und mit der besagte Wärmeabgebendeschicht verbunden ist;
**dadurch gekennzeichnet, dass**
f. die besagte Wärmebrücke mindestens eine von eine erste kontinuierliche wärmeleitende Schicht umfasst, die geschlitzt und gepresst wird, um eine gleichförmigen Anordnung von durchdringenden Elementen im Wesentlichen im rechten Winkel zu dem besagten erste wärmeleitende Schicht, und mindestens eine zweite kontinuierliche planare wärmeleitende Schicht, in die die besagte Elemente eingepresst und gebunden werden, wodurch die besagte Elementen den besagte thermischen Nebenschluss bilden;
g. wobei die Höhe der besagte durchdringenden Elemente mindestens die Dicke der besagte Primärschicht ist und die Höhe der besagte Elemente, die die Dicke der besagte Primärschicht übersteigt, über die Oberfläche der besagte wärmeleitenden Schicht gebogen und abgeflacht wird, in die die besagte Elemente eingepresst und gebunden werden.

3. Ein Verkleiding für die Innenfläche eines Wohnraums, wobei der besagte Verkleiding zur Strahlungswärmeübertragung verwendet wird, und umfasst:
a. eine primäre Mantelschicht mit einer Wärmeleitfähigkeit von weniger als 2 Watt / m ° K;
b. eine Wärmebrücke mit einer Wärmeleitfähigkeit, die mindestens zehnmal größer als die Wärmeleitfähigkeit der besagte Primärschicht ist und eine Wärmesammelschicht, eine Wärmeabgebendeschicht und einen thermischen Nebenschluss umfasst;
c. wobei die besagte Wärmesammelschicht im Wesentlichen parallel zu der besagt Primärschicht und angrenzend der Wärmeabsorptionsseite der besagte Primärschicht ist;
d. wobei die besagte wärmeablgebende Schicht im Wesentlichen parallel zu der besagte Primärschicht und angrenzend der wärmeabgebenden Seite der besagte Primärschicht ist;
e. wobei der thermische Shunt die Primärschicht im Wesentlichen rechtwinklig zur Ebene der besagte Primärschicht durchdringt und thermisch mit der besagte Wärmesammelschicht und mit der besagte Wärmeabgebendeschicht verbunden ist;
**dadurch gekennzeichnet, dass**
f. der thermische Shunt mindestens eine Platte mit einer Wabenstruktur ist;
g. die Dicke der Wabenplatte ist gleich der Dicke der besagte Primärschicht;
h. wobei der besagte Primärschicht eine formbare Phase bei der Herstellung aufweist und die besagte Wabenplatte durch Formen in der besagte Primärschicht eingebettet ist.

4. Ein Verkleiding für die Innenfläche eines Wohnraums, wobei der besagte Verkleiding zur Strahlungswärmeübertragung verwendet wird, und umfasst:
a. eine primäre Mantelschicht mit einer Wärmeleitfähigkeit von weniger als 2 Watt / m ° K;
b. eine Wärmebrücke mit einer Wärmeleitfähigkeit, die mindestens zehnmal größer als die Wärmeleitfähigkeit der besagte Primärschicht ist und eine Wärmesammelschicht, eine Wärmeabgebendeschicht und einen thermischen Nebenschluss umfasst;
c. wobei die besagte Wärmesammelschicht im Wesentlichen parallel zu der besagt Primärschicht und angrenzend der Wärmeabsorptionsseite der besagte Primärschicht ist;
d. wobei die besagte wärmeablgebende Schicht im Wesentlichen parallel zu der besagte Primärschicht und angrenzend der wärmeabgebenden Seite der besagte Primärschicht ist;
e. wobei der thermische Shunt die besagte Primärschicht im Wesentlichen rechtwinklig zur Ebene der besagte Primärschicht durchdringt und thermisch mit der besagte Wärmesammelschicht und mit der besagte Wärmeabgebendeschicht verbunden ist;
**dadurch gekennzeichnet, dass** der Verkleiding weiterhin umfasst:
f. wobei die besagte primäre Mantelschicht eine Schicht aus Stützzement für einen Teppichboden ist;
g. wobei der besagte Wärmeabgebendeschicht wärmeleitende Fäden aufweist, die in ein primäres Grundgewebe für den besagte Teppich eingearbeitet sind;
h. wobei die besagte Wärmesammelschicht wärmeleitende Fäden aufweist, die in ein sekundäres Grundgewebe eingearbeitet sind;
i. wobei der besagte thermische Shunt Schleifen aus wärmeleitendem Faden aufweist, die aus der Unterseite des besagte primären Grundgewebes gewebt oder herausgezogen sind, und durch den besagte Stützzement ragen und gegen das besagte sekundäre Stützgewebe gefaltet sind, wobei die so gebildeten Schleifen der besagte thermische Shunt sind.

5. Ein Verkleiding nach einem der Ansprüche 1 bis 4, bei dem das Material der Wärmebrücke Aluminium ist, das eine Reinheit von 85% und vorzugsweise eine Reinheit von 95% übersteigt.

## Revendications

1. Revêtement pour la surface intérieure d'un espace habitable, ledit revêtement étant utilisé pour le transfert de chaleur rayonnante et comprenant:
a. une couche de revêtement primaire ayant une conductivité thermique inférieure à 2 watts/m°K;
b. un pont thermique ayant une conductivité thermique au moins dix fois supérieure à la conductivité thermique de ladite couche primaire et comprenant une couche collectrice de chaleur, une couche de dispersion de chaleur et un shunt thermique;
c. ladite couche collectrice de chaleur étant substantiellement parallèle à ladite couche primaire et sur le côté absorbant de chaleur de ladite couche primaire ;
d. ladite couche de dispersion de chaleur étant substantiellement parallèle à ladite couche primaire et sur le côté émetteur de chaleur de ladite couche primaire;
e. ledit shunt thermique pénétrant dans ladite couche primaire substantiellement perpendiculairement au plan de ladite couche primaire et connecté thermiquement à ladite couche collectrice de chaleur et à ladite couche de dispersion de chaleur;
f. ledit pont thermique comprenant un ensemble d'éléments répartis et noyés de manière substantiellement uniforme dans ladite couche primaire, chacun desdits éléments étant construit en matériau continu;
g. ladite couche de revêtement primaire ayant, en cours de fabrication, une phase moulable et ledit pont thermique étant noyé dans ladite couche de revêtement primaire pendant ladite phase moulable;
**caractérisé en ce que** :
h. lesdits éléments sont disposés dans une structure ouverte, de sorte que ladite couche de revêtement primaire dans ladite phase moulable peut s'écouler entre lesdits éléments et former une masse cohérente uniforme qui protège l'intégrité structurelle dudit revêtement ;
i. ledit pont thermique ayant un hauteur égale à l'épaisseur dudit revêtement;
j. lesdits éléments étant choisis parmi l'une des alternatives suivantes :
i) spirales de section substantiellement rectangulaire;
ii) des rouleaux de mailles de section substantiellement rectangulaire;
iii) maille formée en ondulations de profil substantiellement rectangulaire;
iv) des boucles formées à partir d'une feuille thermoconductrice coupée en un modèle uniforme de paires de fentes, ladite feuille entre chacune desdites paires de fentes étant pressée perpendiculairement au plan de ladite feuille de sorte que cette partie de ladite feuille soit tirée dans une boucle rectangulaire ouverte, formant un ensemble planaire de boucles rectangulaires, connectées sans couture à une base planaire;
v) des volets formés à partir d'une feuille thermoconductrice coupée en un modèle uniforme de paires de fentes, chacune desdites paires de fentes étant reliée à une extrémité par une coupure perpendiculaire auxdites fentes, ladite feuille entre chacune desdites paires de fentes étant pressée perpendiculairement au plan de ladite feuille de sorte que cette partie de ladite feuille devienne un volet, de manière à former un réseau planaire de volets perpendiculairement à une base plane et reliés sans couture à celle-ci, la hauteur desdits volets dépassant l'épaisseur dudit revêtement primaire, de sorte que lesdits volets peuvent être repliés et aplatis contre la face dudit revêtement primaire opposée à ladite base plane;
vi) bandes en forme de L en treillis conducteur de chaleur ou en feuille thermoconductrice ou en feuille thermoconductrice perforée, fixées en réseau uniforme à une couche de base plane, les parties verticales desdites bandes dépassant l'épaisseur dudit revêtement primaire, lesdites bandes pouvant etant pliées contre la face dudit revêtement primaire qui est opposée audite couche de base plane et etant aplaties contre celle-ci;
vii) des éléments préremplis de forme substantiellement cuboïde enroulés sur leur circonférence avec une feuille thermoconductrice.

2. Revêtement pour la surface intérieure d'un espace habitable, ledit revêtement étant utilisé pour le transfert de chaleur rayonnante et comprenant :
a. une couche de revêtement primaire ayant une conductivité thermique inférieure à 2 watts/m°K;
b. un pont thermique ayant une conductivité thermique au moins dix fois supérieure à la conductivité thermique de ladite couche primaire et comprenant une couche collectrice de chaleur, une couche de dispersion de chaleur et un shunt thermique;
c. ladite couche collectrice de chaleur étant substantiellement parallèle à ladite couche primaire et sur le côté absorbant de chaleur de ladite couche primaire ;
d. ladite couche de dispersion de chaleur étant substantiellement parallèle à ladite couche primaire et sur le côté émetteur de chaleur de ladite couche primaire;
e. ledit shunt thermique pénétrant dans ladite couche primaire substantiellement perpendiculairement au plan de ladite couche primaire et connecté thermiquement à ladite couche collectrice de chaleur et à ladite couche de dispersion de chaleur;
**caractérisé en ce que** :
f. ledit pont thermique comprend au moins une d'une première feuille conductrice de chaleur continue fendue et pressée pour former un arrangement uniforme d'éléments pénétrants substantiellement perpendiculairement à ladite première feuille conductrice de chaleur et au moins une d'une seconde feuille conductrice de chaleur continue plane dans laquelle lesdits éléments sont pressés et fixés ensemble, la partie desdits éléments pénétrants qui est noyée dans ladite couche primaire de revêtement constituant ledit shunt thermique et lesdites première et seconde feuilles constituant lesdites couches collectrices de chaleur et dispersives de chaleur;
g. la hauteur desdits éléments pénétrants étant au moins l'épaisseur de ladite couche de revêtement primaire, et la hauteur desdits éléments dépassant l'épaisseur de ladite couche de revêtement primaire étant pliée et aplatie contre la surface de ladite seconde feuille conductrice de chaleur dans laquelle lesdits éléments sont pressés et fixés.

3. Revêtement pour la surface intérieure d'un espace habitable, ledit revêtement étant utilisé pour le transfert de chaleur rayonnante et comprenant :
a. une couche de revêtement primaire ayant une conductivité thermique inférieure à 2 watts/m°K;
b. un pont thermique ayant une conductivité thermique au moins dix fois supérieure à la conductivité thermique de ladite couche primaire et comprenant une couche collectrice de chaleur, une couche de dispersion de chaleur et un shunt thermique;
c. ladite couche collectrice de chaleur étant substantiellement parallèle à ladite couche primaire et sur le côté absorbant de chaleur de ladite couche primaire;
d. ladite couche de dispersion de chaleur étant substantiellement parallèle à ladite couche primaire et sur le côté émetteur de chaleur de ladite couche primaire;
e. ledit shunt thermique pénétrant dans ladite couche primaire substantiellement perpendiculairement au plan de ladite couche primaire et connecté thermiquement à ladite couche collectrice de chaleur et à ladite couche de dispersion de chaleur;
**caractérisé en ce que** :
f. ledit shunt thermique est au moins un panneau ayant une structure alvéolaire;
g. l'épaisseur dudit panneau alvéolaire étant égale à l'épaisseur de ladite couche de revêtement primaire;
h. ladite couche de revêtement primaire ayant, en cours de fabrication, une phase moulable et ledit panneau alvéolaire étant noyé dans ladite couche de revêtement primaire par moulage.

4. Revêtement pour la surface intérieure d'un espace habitable, ledit revêtement étant utilisé pour le transfert de chaleur rayonnante et comprenant :
a. une couche de revêtement primaire ayant une conductivité thermique inférieure à 2 watts/m°K;
b. un pont thermique ayant une conductivité thermique au moins dix fois supérieure à la conductivité thermique de ladite couche primaire et comprenant une couche collectrice de chaleur, une couche de dispersion de chaleur et un shunt thermique;
c. ladite couche collectrice de chaleur étant substantiellement parallèle à ladite couche primaire et sur le côté absorbant de chaleur de ladite couche primaire;
d. ladite couche de dispersion de chaleur étant substantiellement parallèle à ladite couche primaire et sur le côté émetteur de chaleur de ladite couche primaire;
e. ledit shunt thermique pénétrant dans ladite couche primaire substantiellement perpendiculairement au plan de ladite couche primaire et connecté thermiquement à ladite couche collectrice de chaleur et à ladite couche de dispersion de chaleur;
**caractérisé en ce que** ladite revêtement comprend en outre :
f. ladite couche de revêtement primaire étant une couche de ciment de support pour un tapis;
g. ladite couche de dispersion de chaleur comprenant des fils conducteurs de chaleur incorporés dans un tissu de support primaire pour ledit tapis;
h. ladite couche collectrice de chaleur comprenant des fils conducteurs de chaleur incorporés dans un tissu de support secondaire;
i. ledit shunt thermique comprenant des boucles de fil conducteur de chaleur tissé ou tiré de la face inférieure dudit tissu de support primaire, faisant saillie à travers ledit ciment de support et pliées contre ledit tissu de support secondaire, les boucles ainsi formées étant ledit shunt thermique.

5. Revêtement selon l'une quelconque des revendications 1 à 4, dans lequel le matériau dudit pont thermique est de l'aluminium ayant une pureté supérieure à 85% et de préférence supérieure à 95%.
